(19)

**Europäisches Patentamt**
**European Patent Office**
**Office européen des brevets**

(11)  **EP 4 625 113 A1**

(12)  **EUROPEAN PATENT APPLICATION**

(43) Date of publication:
01.10.2025 Bulletin 2025/40

(21) Application number: 25158402.5

(22) Date of filing: 17.02.2025

(51) International Patent Classification (IPC):
**G06F 1/3234** (2019.01)    **G06F 1/3225** (2019.01)
**G06F 1/3228** (2019.01)    **G06F 1/3287** (2019.01)
**G06F 3/06** (2006.01)

(52) Cooperative Patent Classification (CPC):
**G06F 1/3225; G06F 1/3228; G06F 1/3243;**
**G06F 1/3275; G06F 1/3287; G06F 3/0625;**
**G06F 3/0634; G06F 3/0656; G06F 3/0688**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **29.03.2024  US 202463571437 P**
**27.06.2024  US 202418757343**

(71) Applicant: **INTEL Corporation**
**Santa Clara, CA 95054 (US)**

(72) Inventors:
• **SRIVASTAVA, Amit Kumar**
**95630 Folsom (US)**
• **VADIVELU, Karthi**
**95630 Folsom (US)**
• **HUNSAKER, Mikal**
**95762 El Dorado Hills (US)**

(74) Representative: **HGF**
**HGF Limited**
**1 City Walk**
**Leeds LS11 9DX (GB)**

(54)  **APPARATUS AND METHOD FOR SYSTEM POWER OPTIMIZATIONS FOR USB IMAGING APPLICATIONS**

(57)    Techniques are described for allowing a memory to remain in a low power state for a longer period using a buffer to store data captured from a USB camera. Circuitry prefetches USB DMA descriptors, a write buffer stores and aggregates data from the camera, and a control flow flushes the buffer at the appropriate time to reduce the frequency of memory accesses, while at the same time minimizing the additional system latencies due to the buffer. The prefetch algorithm and buffer size are designed to reduce memory access frequency (e.g., once in 10ms, 16ms, etc), compared to memory accesses every 125uS.

*Fig. 18*

EP 4 625 113 A1

Processed by Luminess, 75001 PARIS (FR)

**Description**

**BACKGROUND**

**Field of the Invention**

The embodiments of the invention relate generally to the field of computer processors. More particularly, the embodiments relate to an apparatus and method for system power optimization for USB imaging applications.

**Description of the Related Art**

USB cameras are widely used on client platforms due to cost and ease of platform engineering. Client platforms have so far not attempted to optimize system platform power consumption with USB cameras. USB camera devices are generally implemented as isochronous devices that require the USB host controller on the SoC to read data from the camera periodically, typically every 125us. The data read from the camera is then written by the host controller into system memory.

However, the continuous writing of data to memory results in heightened power consumption due to the processor package remaining in the C2 state, as well as the power consumption of the die-to-die links connecting the IO die (that implements the USB controller) to the hub die that implements the memory controller. This results in additional power consumption of roughly 540mW.

**BRIEF DESCRIPTION OF THE DRAWINGS**

A better understanding of the present invention can be obtained from the following detailed description in conjunction with the following drawings, in which:

FIG. 1 illustrates an example computer system architecture.
FIG. 2 illustrates a processor comprising a plurality of cores.
FIG. 3A illustrates a plurality of stages of a processing pipeline.
FIG. 3B illustrates details of one embodiment of a core.
FIG. 4 illustrates execution circuitry in accordance with one embodiment.
FIG. 5 illustrates one embodiment of a register architecture.
FIG. 6 illustrates one example of an instruction format.
FIG. 7 illustrates addressing techniques in accordance with one embodiment.
FIG. 8 illustrates one embodiment of an instruction prefix.
FIGS. 9A-D illustrate embodiments of how the R, X, and B fields of the prefix are used.
FIGS. 10A-B illustrate examples of a second instruction prefix.
FIG. 11 illustrates payload bytes of one embodiment of an instruction prefix.
FIG. 12 illustrates instruction conversion and binary translation implementations.
FIG. 13 is a block diagram of a portion of a system in accordance with an embodiment of the present invention.
FIG 14 illustrates an architecture in accordance with some embodiments in which a global table is used to schedule execution on cores and/or logical processors.
FIG. 15 illustrates a disaggregated tile-based architecture on which embodiments of the invention may be implemented.
FIG 16 illustrates additional details of one embodiment of the disaggregated tile-based architecture.
FIG. 17 illustrates an apparatus in accordance with embodiments of the invention.
FIG. 18 illustrates a finite state machine in accordance with one embodiment of a deferred write buffer.
FIG. 19 illustrates an example a transfer ring data structure comprising a plurality of transfer request blocks.
FIG. 20 illustrates a transaction diagram showing data transferred to memory from a USB controller.
FIG. 21 illustrates a transaction diagram showing data transferred to memory from a deferred write buffer in accordance with embodiments of the invention.

**DETAILED DESCRIPTION**

In the following description, for the purposes of explanation, numerous specific details are set forth in order to provide a thorough understanding of the embodiments of the invention described below. It will be apparent, however, to one skilled in the art that the embodiments of the invention may be practiced without some of these specific details. In other instances, well-known structures and devices are shown in block diagram form to avoid obscuring the underlying principles of the embodiments of the invention.

**Exemplary Computer Architectures**

Detailed below are descriptions of exemplary computer architectures. Other system designs and configurations known in the arts for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, hand held devices, and various other electronic devices, are also suitable. In general, a huge variety of systems or electronic devices capable of incorporating a processor and/or other execution logic as disclosed herein are generally suitable.

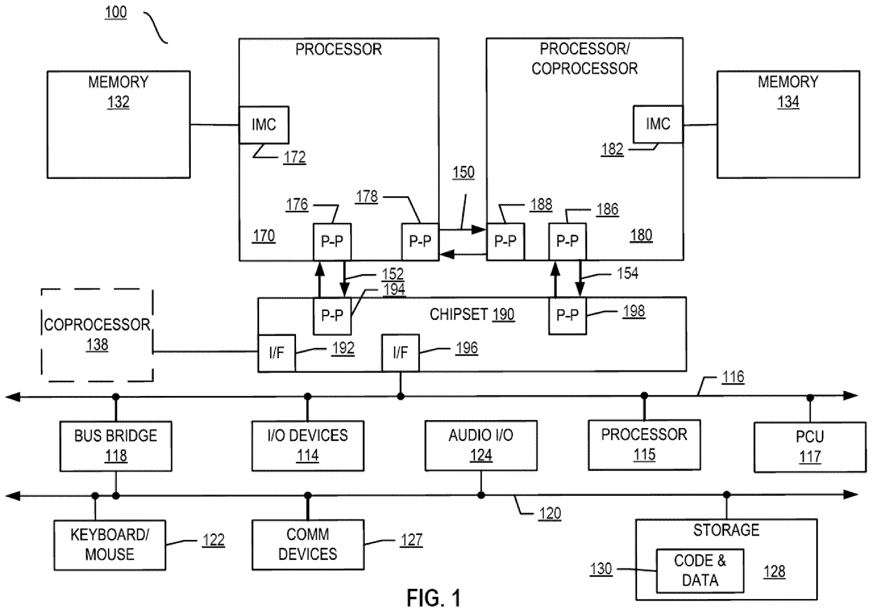

**FIG. 1** illustrates embodiments of an exemplary system. Multiprocessor system 100 is a point-to-point interconnect system and includes a plurality of processors including a first processor 170 and a second processor 180 coupled via a point-to-point interconnect 150. In some embodiments, the first processor 170 and the second processor 180 are homogeneous. In some embodiments, first processor 170 and the second processor 180 are heterogenous.

Processors 170 and 180 are shown including integrated memory controller (IMC) units circuitry 172 and 182, respectively. Processor 170 also includes as part of its interconnect controller units point-to-point (P-P) interfaces 176 and 178; similarly, second processor 180 includes P-P interfaces 186 and 188. Processors 170, 180 may exchange information via the point-to-point (P-P) interconnect 150 using P-P interface circuits 178, 188. IMCs 172 and 182 couple the processors 170, 180 to respective memories, namely a memory 132 and a memory 134, which may be portions of main memory locally attached to the respective processors.

Processors 170, 180 may each exchange information with a chipset 190 via individual P-P interconnects 152, 154 using point to point interface circuits 176, 194, 186, 198. Chipset 190 may optionally exchange information with a coprocessor 138 via a high-performance interface 192. In some embodiments, the coprocessor 138 is a special-purpose processor, such as, for example, a high-throughput MIC processor, a network or communication processor, compression engine, graphics processor, GPGPU, embedded processor, or the like.

A shared cache (not shown) may be included in either processor 170, 180 or outside of both processors, yet connected with the processors via P-P interconnect, such that either or both processors' local cache information may be stored in the shared cache if a processor is placed into a low power mode.

Chipset 190 may be coupled to a first interconnect 116 via an interface 196. In some embodiments, first interconnect 116 may be a Peripheral Component Interconnect (PCI) interconnect, or an interconnect such as a PCI Express interconnect or another I/O interconnect. In some embodiments, one of the interconnects couples to a power control unit (PCU) 117, which may include circuitry, software, and/or firmware to perform power management operations with regard to the processors 170, 180 and/or co-processor 138. PCU 117 provides control information to a voltage regulator to cause the voltage regulator to generate the appropriate regulated voltage. PCU 117 also provides control information to control the operating voltage generated. In various embodiments, PCU 117 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 117 is illustrated as being present as logic separate from the processor 170 and/or processor 180. In other cases, PCU 117 may execute on a given one or more of cores (not shown) of processor 170 or 180. In some cases, PCU 117 may be implemented as a microcontroller (dedicated or general-purpose) or other control logic configured to execute its own dedicated power management code, sometimes referred to as P-code. In yet other embodiments, power management operations to be performed by PCU 117 may be implemented externally to a processor, such as by way of a separate power management integrated circuit (PMIC) or another component external to the processor. In yet other embodiments, power management operations to be performed by PCU 117 may be implemented within BIOS or other system software.

Various I/O devices 114 may be coupled to first interconnect 116, along with an interconnect (bus) bridge 118 which couples first interconnect 116 to a second interconnect 120. In some embodiments, one or more additional processor(s) 115, such as coprocessors, high-throughput MIC processors, GPGPU's, accelerators (such as, e.g., graphics accelerators or digital signal processing (DSP) units), field programmable gate arrays (FPGAs), or any other processor, are coupled to first interconnect 116. In some embodiments, second interconnect 120 may be a low pin count (LPC) interconnect. Various devices may be coupled to second interconnect 120 including, for example, a keyboard and/or mouse 122, communication devices 127 and a storage unit circuitry 128. Storage unit circuitry 128 may be a disk drive or other mass storage device which may include instructions/code and data 130, in some embodiments. Further, an audio I/O 124 may be coupled to second interconnect 120. Note that other architectures than the point-to-point architecture described above are possible. For example, instead of the point-to-point architecture, a system such as multiprocessor system 100 may implement a multi-drop interconnect or other such architecture.

**Exemplary Core Architectures, Processors, and Computer Architectures**

Processor cores may be implemented in different ways, for different purposes, and in different processors. For instance, implementations of such cores may include: 1) a general purpose in-order core intended for general-purpose computing; 2) a high performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput). Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip that may include on the same die as the described CPU (sometimes referred to as the application core(s) or application processor(s)), the above described coprocessor, and additional functionality. Exemplary core architectures are described next, followed by descriptions of exemplary processors and computer architectures.

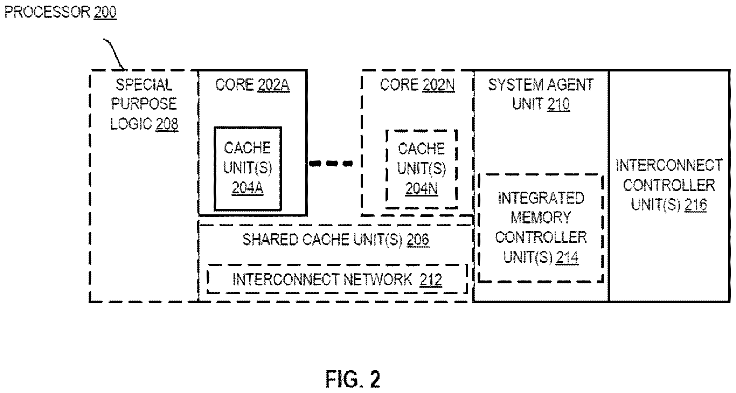

**FIG. 2** illustrates a block diagram of embodiments of a processor 200 that may have more than one core, may have an integrated memory controller, and may have integrated graphics. The solid lined boxes illustrate a processor 200 with a single core 202A, a system agent 210, a set of one or more interconnect controller units circuitry 216, while the optional addition of the dashed lined boxes illustrates an alternative processor 200 with multiple cores 202(A)-(N), a set of one or more integrated memory controller unit(s) circuitry 214 in the system agent unit circuitry 210, and special purpose logic 208, as well as a set of one or more interconnect controller units circuitry 216. Note that the processor 200 may be one of the processors 170 or 180, or co-processor 138 or 115 of **FIG. 1.**

Thus, different implementations of the processor 200 may include: 1) a CPU with the special purpose logic 208 being integrated graphics and/or scientific (throughput) logic (which may include one or more cores, not shown), and the cores 202(A)-(N) being one or more general purpose cores (e.g., general purpose in-order cores, general purpose out-of-order cores, or a combination of the two); 2) a coprocessor with the cores 202(A)-(N) being a large number of special purpose cores intended primarily for graphics and/or scientific (throughput); and 3) a coprocessor with the cores 202(A)-(N) being a large number of general purpose in-order cores. Thus, the processor 200 may be a general-purpose processor, coprocessor or special-purpose processor, such as, for example, a network or communication processor, compression engine, graphics processor, GPGPU (general purpose graphics processing unit circuitry), a high-throughput many integrated core (MIC) coprocessor (including 30 or more cores), embedded processor, or the like. The processor may be implemented on one or more chips. The processor 200 may be a part of and/or may be implemented on one or more substrates using any of a number of process technologies, such as, for example, BiCMOS, CMOS, or NMOS.

A memory hierarchy includes one or more levels of cache unit(s) circuitry 204(A)-(N) within the cores 202(A)-(N), a set of one or more shared cache units circuitry 206, and external memory (not shown) coupled to the set of integrated memory controller units circuitry 214. The set of one or more shared cache units circuitry 206 may include one or more mid-level caches, such as level 2 (L2), level 3 (L3), level 4 (L4), or other levels of cache, such as a last level cache (LLC), and/or combinations thereof. While in some embodiments ring-based interconnect network circuitry 212 interconnects the special purpose logic 208 (e.g., integrated graphics logic), the set of shared cache units circuitry 206, and the system agent unit circuitry 210, alternative embodiments use any number of well-known techniques for interconnecting such units. In some embodiments, coherency is maintained between one or more of the shared cache units circuitry 206 and cores 202(A)-(N).

In some embodiments, one or more of the cores 202(A)-(N) are capable of multi-threading. The system agent unit circuitry 210 includes those components coordinating and operating cores 202(A)-(N). The system agent unit circuitry 210 may include, for example, power control unit (PCU) circuitry and/or display unit circuitry (not shown). The PCU may be or may include logic and components needed for regulating the power state of the cores 202(A)-(N) and/or the special purpose logic 208 (e.g., integrated graphics logic). The display unit circuitry is for driving one or more externally connected displays.

The cores 202(A)-(N) may be homogenous or heterogeneous in terms of architecture instruction set; that is, two or more of the cores 202(A)-(N) may be capable of executing the same instruction set, while other cores may be capable of executing only a subset of that instruction set or a different instruction set.

**Exemplary Core Architectures**

**In-order and out-of-order core block diagram**

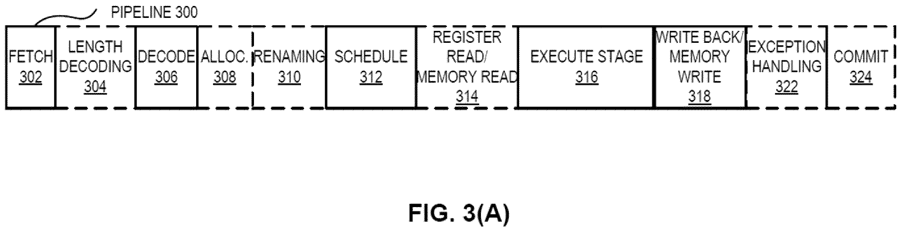

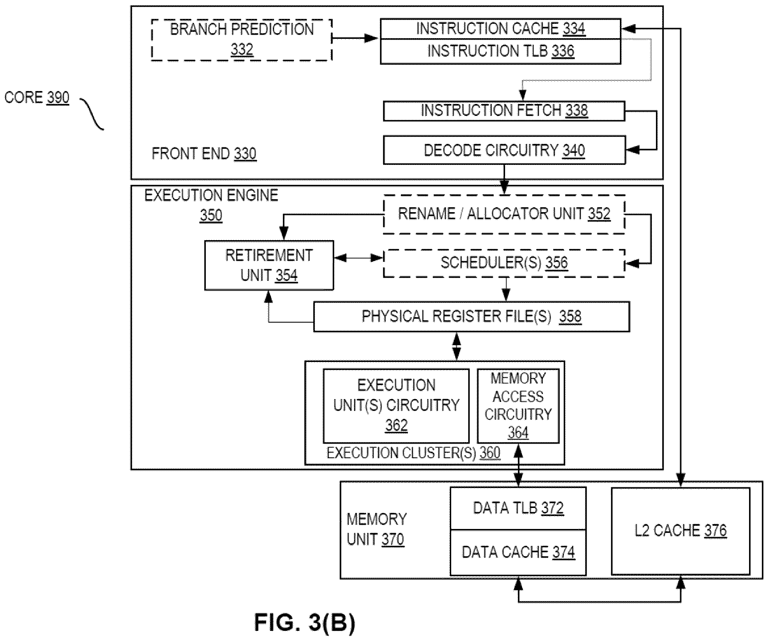

**FIG. 3(A)** is a block diagram illustrating both an exemplary in-order pipeline and an exemplary register renaming, out-of-order issue/execution pipeline according to embodiments of the invention. **FIG. 3(B)** is a block diagram illustrating both an exemplary embodiment of an in-order architecture core and an exemplary register renaming, out-of-order issue/execution architecture core to be included in a processor according to embodiments of the invention. The solid lined boxes in **FIGS. 3(A)-(B)** illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In **FIG. 3(A),** a processor pipeline 300 includes a fetch stage 302, an optional length decode stage 304, a decode stage 306, an optional allocation stage 308, an optional renaming stage 310, a scheduling (also known as a dispatch or issue) stage 312, an optional register read/memory read stage 314, an execute stage 316, a write back/memory write stage 318, an optional exception handling stage 322, and an optional commit stage 324. One or more operations can be performed in each of these processor pipeline stages. For example, during the fetch stage 302, one or more instructions are fetched from instruction memory, during the decode stage 306, the one or more fetched instructions may be decoded, addresses (e.g., load store unit (LSU) addresses) using forwarded register ports may be generated, and branch forwarding (e.g., immediate offset or an link register (LR)) may be performed. In one embodiment, the decode stage 306 and the register read/memory read stage 314 may be combined into one pipeline stage. In one embodiment, during the execute stage 316, the decoded instructions may be executed, LSU address/data pipelining to an Advanced Microcontroller Bus (AHB) interface may be performed, multiply and add operations may be performed, arithmetic operations with branch results may be performed, etc.

By way of example, the exemplary register renaming, out-of-order issue/execution core architecture may implement the pipeline 300 as follows: 1) the instruction fetch 338 performs the fetch and length decoding stages 302 and 304; 2) the decode unit circuitry 340 performs the decode stage 306; 3) the rename/allocator unit circuitry 352 performs the allocation stage 308 and renaming stage 310; 4) the scheduler unit(s) circuitry 356 performs the schedule stage 312; 5) the physical register file(s) unit(s) circuitry 358 and the memory unit circuitry 370 perform the register read/memory read stage 314; the execution cluster 360 perform the execute stage 316; 6) the memory unit circuitry 370 and the physical register file(s) unit(s) circuitry 358 perform the write back/memory write stage 318; 7) various units (unit circuitry) may be involved in the exception handling stage 322; and 8) the retirement unit circuitry 354 and the physical register file(s) unit(s) circuitry 358 perform the commit stage 324.

**FIG. 3(B)** shows processor core 390 including front-end unit circuitry 330 coupled to an execution engine unit circuitry 350, and both are coupled to a memory unit circuitry 370. The core 390 may be a reduced instruction set computing (RISC) core, a complex instruction set computing (CISC) core, a very long instruction word (VLIW) core, or a hybrid or alternative core type. As yet another option, the core 390 may be a special-purpose core, such as, for example, a network or communication core, compression engine, coprocessor core, general purpose computing graphics processing unit (GPGPU) core, graphics core, or the like.

The front end unit circuitry 330 may include branch prediction unit circuitry 332 coupled to an instruction cache unit circuitry 334, which is coupled to an instruction translation lookaside buffer (TLB) 336, which is coupled to instruction fetch unit circuitry 338, which is coupled to decode unit circuitry 340. In one embodiment, the instruction cache unit circuitry 334 is included in the memory unit circuitry 370 rather than the front-end unit circuitry 330. The decode unit circuitry 340 (or decoder) may decode instructions, and generate as an output one or more micro-operations, micro-code entry points, microinstructions, other instructions, or other control signals, which are decoded from, or which otherwise reflect, or are derived from, the original instructions. The decode unit circuitry 340 may further include an address generation unit circuitry (AGU, not shown). In one embodiment, the AGU generates an LSU address using forwarded register ports, and may further perform branch forwarding (e.g., immediate offset branch forwarding, LR register branch forwarding, etc.). The decode unit circuitry 340 may be implemented using various different mechanisms. Examples of suitable mechanisms include, but are not limited to, look-up tables, hardware implementations, programmable logic arrays (PLAs), microcode read only memories (ROMs), etc. In one embodiment, the core 390 includes a microcode ROM (not shown) or other medium that stores microcode for certain macroinstructions (e.g., in decode unit circuitry 340 or otherwise within the front end unit circuitry 330). In one embodiment, the decode unit circuitry 340 includes a micro-operation (micro-op) or operation cache (not shown) to hold/cache decoded operations, micro-tags, or micro-operations generated during the decode or other stages of the processor pipeline 300. The decode unit circuitry 340 may be coupled to rename/allocator unit circuitry 352 in the execution engine unit circuitry 350.

The execution engine circuitry 350 includes the rename/allocator unit circuitry 352 coupled to a retirement unit circuitry 354 and a set of one or more scheduler(s) circuitry 356. The scheduler(s) circuitry 356 represents any number of different schedulers, including reservations stations, central instruction window, etc. In some embodiments, the scheduler(s) circuitry 356 can include arithmetic logic unit (ALU) scheduler/scheduling circuitry, ALU queues, arithmetic generation unit (AGU) scheduler/scheduling circuitry, AGU queues, etc. The scheduler(s) circuitry 356 is coupled to the physical register file(s) circuitry 358. Each of the physical register file(s) circuitry 358 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one embodiment, the physical register file(s) unit circuitry 358 includes vector registers unit circuitry, writemask registers unit circuitry, and scalar register unit circuitry. These register units may provide architectural vector registers, vector mask registers, general-purpose registers, etc. The physical register file(s) unit(s) circuitry 358 is overlapped by the retirement unit circuitry 354 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 354 and the physical register file(s) circuitry 358 are coupled to the execution cluster(s) 360. The execution cluster(s) 360 includes a set of one or more execution units circuitry 362 and a set of one or more memory access circuitry 364. The execution units circuitry 362 may perform various arithmetic, logic, floating-point or other types of operations (e.g., shifts, addition, subtraction, multiplication) and on various types of data (e.g., scalar floating-point, packed integer, packed floating-point, vector integer, vector floating-point). While some embodiments may include a number of execution units or execution unit circuitry dedicated to specific functions or sets of functions, other embodiments may include only one execution unit circuitry or multiple execution units/execution unit circuitry that all perform all functions. The scheduler(s) circuitry 356, physical register file(s) unit(s) circuitry 358, and execution cluster(s) 360 are shown as being possibly plural because certain embodiments create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) unit circuitry, and/or execution cluster- and in the case of a separate memory access pipeline, certain embodiments are implemented in which only the execution cluster of this pipeline has the memory access unit(s) circuitry 364). It should also be understood that where separate pipelines are used, one or more of these pipelines may be out-of-order issue/execution and the rest in-order.

In some embodiments, the execution engine unit circuitry 350 may perform load store unit (LSU) address/data pipelining to an Advanced Microcontroller Bus (AHB) interface (not shown), and address phase and writeback, data phase load, store, and branches.

The set of memory access circuitry 364 is coupled to the memory unit circuitry 370, which includes data TLB unit circuitry 372 coupled to a data cache circuitry 374 coupled to a level 2 (L2) cache circuitry 376. In one exemplary embodiment, the memory access units circuitry 364 may include a load unit circuitry, a store address unit circuit, and a store data unit circuitry, each of which is coupled to the data TLB circuitry 372 in the memory unit circuitry 370. The instruction cache circuitry 334 is further coupled to a level 2 (L2) cache unit circuitry 376 in the memory unit circuitry 370. In one embodiment, the instruction cache 334 and the data cache 374 are combined into a single instruction and data cache (not shown) in L2 cache unit circuitry 376, a level 3 (L3) cache unit circuitry (not shown), and/or main memory. The L2 cache unit circuitry 376 is coupled to one or more other levels of cache and eventually to a main memory.

The core 390 may support one or more instructions sets (e.g., the x86 instruction set (with some extensions that have been added with newer versions); the MIPS instruction set; the ARM instruction set (with optional additional extensions such as NEON)), including the instruction(s) described herein. In one embodiment, the core 390 includes logic to support a packed data instruction set extension (e.g., AVX1, AVX2), thereby allowing the operations used by many multimedia applications to be performed using packed data.

**Exemplary Execution Unit(s) Circuitry**

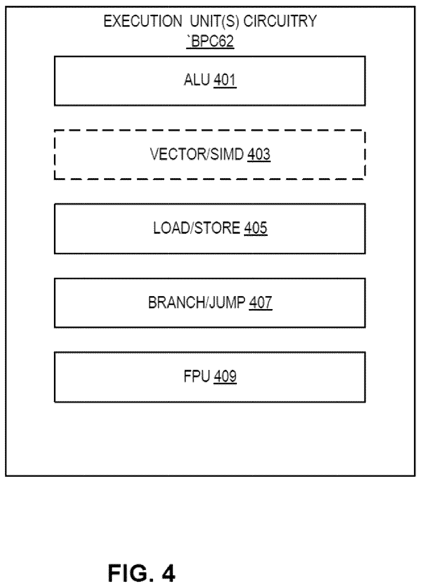

**FIG. 4** illustrates embodiments of execution unit(s) circuitry, such as execution unit(s) circuitry 362 of FIG. 3(B). As illustrated, execution unit(s) circuity 362 may include one or more ALU circuits 401, vector/SIMD unit circuits 403, load/store unit circuits 405, and/or branch/jump unit circuits 407. ALU circuits 401 perform integer arithmetic and/or Boolean operations. Vector/SIMD unit circuits 403 perform vector/SIMD operations on packed data (such as SIMD/vector registers). Load/store unit circuits 405 execute load and store instructions to load data from memory into registers or store from registers to memory. Load/store unit circuits 405 may also generate addresses. Branch/jump unit circuits 407 cause a branch or jump to a memory address depending on the instruction. Floating-point unit (FPU) circuits 409 perform floating-point arithmetic. The width of the execution unit(s) circuitry 362 varies depending upon the embodiment and can range from 16-bit to 1,024-bit. In some embodiments, two or more smaller execution units are logically combined to form a larger execution unit (e.g., two 128-bit execution units are logically combined to form a 256-bit execution unit).

**Exemplary Register Architecture**

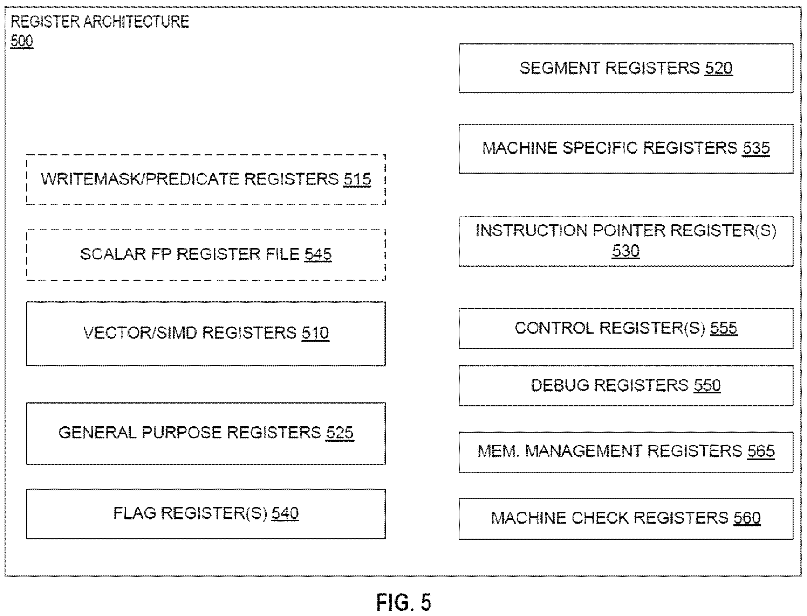

**FIG. 5** is a block diagram of a register architecture 500 according to some embodiments. As illustrated, there are vector/SIMD registers 510 that vary from 128-bit to 1,024 bits width. In some embodiments, the vector/SIMD registers 510 are physically 512-bits and, depending upon the mapping, only some of the lower bits are used. For example, in some embodiments, the vector/SIMD registers 510 are ZMM registers which are 512 bits: the lower 256 bits are used for YMM registers and the lower 128 bits are used for XMM registers. As such, there is an overlay of registers. In some embodiments, a vector length field selects between a maximum length and one or more other shorter lengths, where each such shorter length is half the length of the preceding length. Scalar operations are operations performed on the lowest order data element position in a ZMM/YMM/XMM register; the higher order data element positions are either left the same as they were prior to the instruction or zeroed depending on the embodiment.

In some embodiments, the register architecture 500 includes writemask/predicate registers 515. For example, in some embodiments, there are 8 writemask/predicate registers (sometimes called k0 through k7) that are each 16-bit, 32-bit, 64-bit, or 128-bit in size. Write mask/predicate registers 515 may allow for merging (e.g., allowing any set of elements in the destination to be protected from updates during the execution of any operation) and/or zeroing (e.g., zeroing vector masks allow any set of elements in the destination to be zeroed during the execution of any operation). In some embodiments, each data element position in a given writemask/predicate register 515 corresponds to a data element position of the destination. In other embodiments, the writemask/predicate registers 515 are scalable and consists of a set number of enable bits for a given vector element (e.g., 8 enable bits per 64-bit vector element).

The register architecture 500 includes a plurality of general-purpose registers 525. These registers may be 16-bit, 32-bit, 64-bit, etc. and can be used for scalar operations. In some embodiments, these registers are referenced by the names RAX, RBX, RCX, RDX, RBP, RSI, RDI, RSP, and R8 through R15.

In some embodiments, the register architecture 500 includes scalar floating-point register 545 which is used for scalar floating-point operations on 32/64/80-bit floating-point data using the x87 instruction set extension or as MMX registers to perform operations on 64-bit packed integer data, as well as to hold operands for some operations performed between the MMX and XMM registers.

One or more flag registers 540 (e.g., EFLAGS, RFLAGS, etc.) store status and control information for arithmetic, compare, and system operations. For example, the one or more flag registers 540 may store condition code information such as carry, parity, auxiliary carry, zero, sign, and overflow. In some embodiments, the one or more flag registers 540 are called program status and control registers.

Segment registers 520 contain segment points for use in accessing memory. In some embodiments, these registers are referenced by the names CS, DS, SS, ES, FS, and GS.

Machine specific registers (MSRs) 535 control and report on processor performance. Most MSRs 535 handle system-related functions and are not accessible to an application program. Machine check registers 560 consist of control, status, and error reporting MSRs that are used to detect and report on hardware errors.

One or more instruction pointer register(s) 530 store an instruction pointer value. Control register(s) 555 (e.g., CR0-CR4) determine the operating mode of a processor (e.g., processor 170, 180, 138, 115, and/or 200) and the characteristics of a currently executing task. Debug registers 550 control and allow for the monitoring of a processor or core's debugging operations.

Memory management registers 565 specify the locations of data structures used in protected mode memory management. These registers may include a GDTR, IDRT, task register, and a LDTR register.

Alternative embodiments of the invention may use wider or narrower registers. Additionally, alternative embodiments of the invention may use more, less, or different register files and registers.

**Instruction Sets**

An instruction set architecture (ISA) may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down though the definition of instruction templates (or sub-formats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an exemplary ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands.

**Exemplary Instruction Formats**

Embodiments of the instruction(s) described herein may be embodied in different formats. Additionally, exemplary systems, architectures, and pipelines are detailed below. Embodiments of the instruction(s) may be executed on such systems, architectures, and pipelines, but are not limited to those detailed.

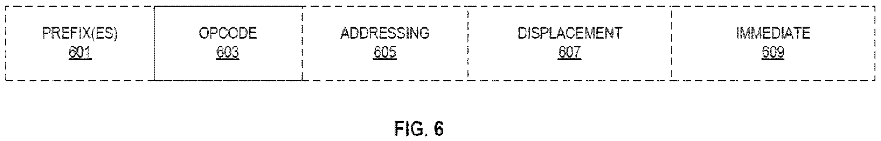

**FIG. 6** illustrates embodiments of an instruction format. As illustrated, an instruction may include multiple components including, but not limited to, one or more fields for: one or more prefixes 601, an opcode 603, addressing information 605 (e.g., register identifiers, memory addressing information, etc.), a displacement value 607, and/or an immediate 609. Note that some instructions utilize some or all of the fields of the format whereas others may only use the field for the opcode 603. In some embodiments, the order illustrated is the order in which these fields are to be encoded, however, it should be appreciated that in other embodiments these fields may be encoded in a different order, combined, etc.

The prefix(es) field(s) 601, when used, modifies an instruction. In some embodiments, one or more prefixes are used to repeat string instructions (e.g., 0xF0, 0xF2, 0xF3, etc.), to provide section overrides (e.g., 0x2E, 0x36, 0x3E, 0x26, 0x64, 0x65, 0x2E, 0x3E, etc.), to perform bus lock operations, and/or to change operand (e.g., 0x66) and address sizes (e.g., 0x67). Certain instructions require a mandatory prefix (e.g., 0x66, 0xF2, 0xF3, etc.). Certain of these prefixes may be considered "legacy" prefixes. Other prefixes, one or more examples of which are detailed herein, indicate, and/or provide further capability, such as specifying particular registers, etc. The other prefixes typically follow the "legacy" prefixes.

The opcode field 603 is used to at least partially define the operation to be performed upon a decoding of the instruction. In some embodiments, a primary opcode encoded in the opcode field 603 is 1, 2, or 3 bytes in length. In other embodiments, a primary opcode can be a different length. An additional 3-bit opcode field is sometimes encoded in another field.

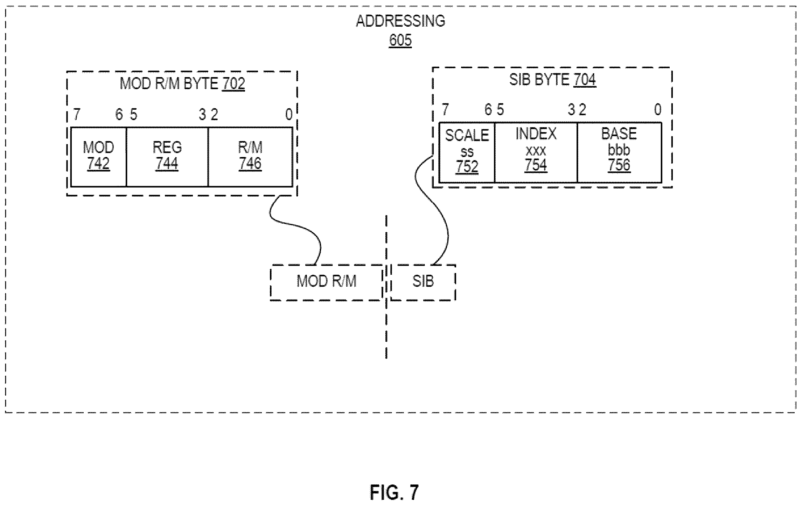

The addressing field 605 is used to address one or more operands of the instruction, such as a location in memory or one or more registers. **FIG. 7** illustrates embodiments of the addressing field 605. In this illustration, an optional ModR/M byte 702 and an optional Scale, Index, Base (SIB) byte 704 are shown. The ModR/M byte 702 and the SIB byte 704 are used to encode up to two operands of an instruction, each of which is a direct register or effective memory address. Note that each of these fields are optional in that not all instructions include one or more of these fields. The MOD R/M byte 702 includes a MOD field 742, a register field 744, and R/M field 746.

The content of the MOD field 742 distinguishes between memory access and non-memory access modes. In some embodiments, when the MOD field 742 has a value of b11, a register-direct addressing mode is utilized, and otherwise register-indirect addressing is used.

The register field 744 may encode either the destination register operand or a source register operand, or may encode an opcode extension and not be used to encode any instruction operand. The content of register index field 744, directly or through address generation, specifies the locations of a source or destination operand (either in a register or in memory). In some embodiments, the register field 744 is supplemented with an additional bit from a prefix (e.g., prefix 601) to allow for greater addressing.

The R/M field 746 may be used to encode an instruction operand that references a memory address, or may be used to encode either the destination register operand or a source register operand. Note the R/M field 746 may be combined with the MOD field 742 to dictate an addressing mode in some embodiments.

The SIB byte 704 includes a scale field 752, an index field 754, and a base field 756 to be used in the generation of an address. The scale field 752 indicates scaling factor. The index field 754 specifies an index register to use. In some embodiments, the index field 754 is supplemented with an additional bit from a prefix (e.g., prefix 601) to allow for greater addressing. The base field 756 specifies a base register to use. In some embodiments, the base field 756 is supplemented with an additional bit from a prefix (e.g., prefix 601) to allow for greater addressing. In practice, the content of the scale field 752 allows for the scaling of the content of the index field 754 for memory address generation (e.g., for address generation that uses $2^{scale} * index + base$).

Some addressing forms utilize a displacement value to generate a memory address. For example, a memory address may be generated according to $2^{scale} * index + base + displacement$, index*scale+displacement, r/m + displacement, instruction pointer (RIP/EIP) + displacement, register + displacement, etc. The displacement may be a 1-byte, 2-byte, 4-byte, etc. value. In some embodiments, a displacement field 607 provides this value. Additionally, in some embodiments, a displacement factor usage is encoded in the MOD field of the addressing field 605 that indicates a compressed displacement scheme for which a displacement value is calculated by multiplying disp8 in conjunction with a scaling factor N that is determined based on the vector length, the value of a b bit, and the input element size of the instruction. The displacement value is stored in the displacement field 607.

In some embodiments, an immediate field 609 specifies an immediate for the instruction. An immediate may be encoded as a 1-byte value, a 2-byte value, a 4-byte value, etc.

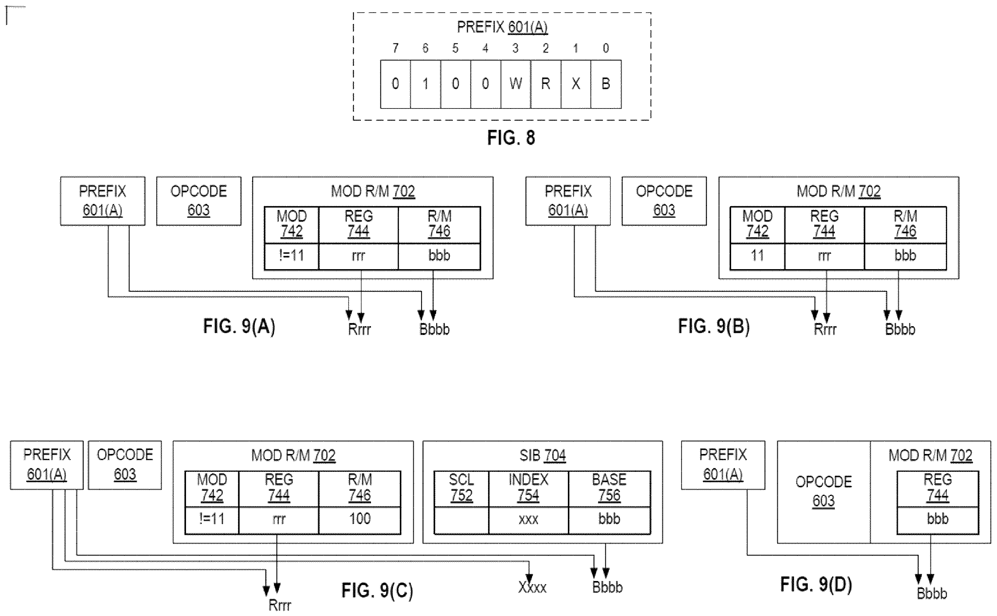

**FIG. 8** illustrates embodiments of a first prefix 601(A). In some embodiments, the first prefix 601(A) is an embodiment of a REX prefix. Instructions that use this prefix may specify general purpose registers, 64-bit packed data registers (e.g., single instruction, multiple data (SIMD) registers or vector registers), and/or control registers and debug registers (e.g., CR8-CR15 and DR8-DR15).

Instructions using the first prefix 601(A) may specify up to three registers using 3-bit fields depending on the format: 1) using the reg field 744 and the R/M field 746 of the Mod R/M byte 702; 2) using the Mod R/M byte 702 with the SIB byte 704 including using the reg field 744 and the base field 756 and index field 754; or 3) using the register field of an opcode.

In the first prefix 601(A), bit positions 7:4 are set as 0100. Bit position 3 (W) can be used to determine the operand size, but may not solely determine operand width. As such, when W = 0, the operand size is determined by a code segment descriptor (CS.D) and when W = 1, the operand size is 64-bit.

Note that the addition of another bit allows for 16 ($2^4$) registers to be addressed, whereas the MOD R/M reg field 744 and MOD R/M R/M field 746 alone can each only address 8 registers.

In the first prefix 601(A), bit position 2 (R) may an extension of the MOD R/M reg field 744 and may be used to modify the ModR/M reg field 744 when that field encodes a general purpose register, a 64-bit packed data register (e.g., a SSE register), or a control or debug register. R is ignored when Mod R/M byte 702 specifies other registers or defines an extended opcode.

Bit position 1 (X) X bit may modify the SIB byte index field 754.

Bit position B (B) B may modify the base in the Mod R/M R/M field 746 or the SIB byte base field 756; or it may modify the opcode register field used for accessing general purpose registers (e.g., general purpose registers 525).

**FIGS. 9(A)-(D)** illustrate embodiments of how the R, X, and B fields of the first prefix 601(A) are used. **FIG. 9(A)** illustrates R and B from the first prefix 601(A) being used to extend the reg field 744 and R/M field 746 of the MOD R/M byte 702 when the SIB byte 7 04 is not used for memory addressing. **FIG. 9(B)** illustrates R and B from the first prefix 601(A) being used to extend the reg field 744 and R/M field 746 of the MOD R/M byte 702 when the SIB byte 7 04 is not used (register-register addressing). **FIG. 9(C)** illustrates R, X, and B from the first prefix 601(A) being used to extend the reg field 744 of the MOD R/M byte 702 and the index field 754 and base field 756 when the SIB byte 7 04 being used for memory addressing. **FIG. 9(D)** illustrates B from the first prefix 601(A) being used to extend the reg field 744 of the MOD R/M byte 702 when a register is encoded in the opcode 603.

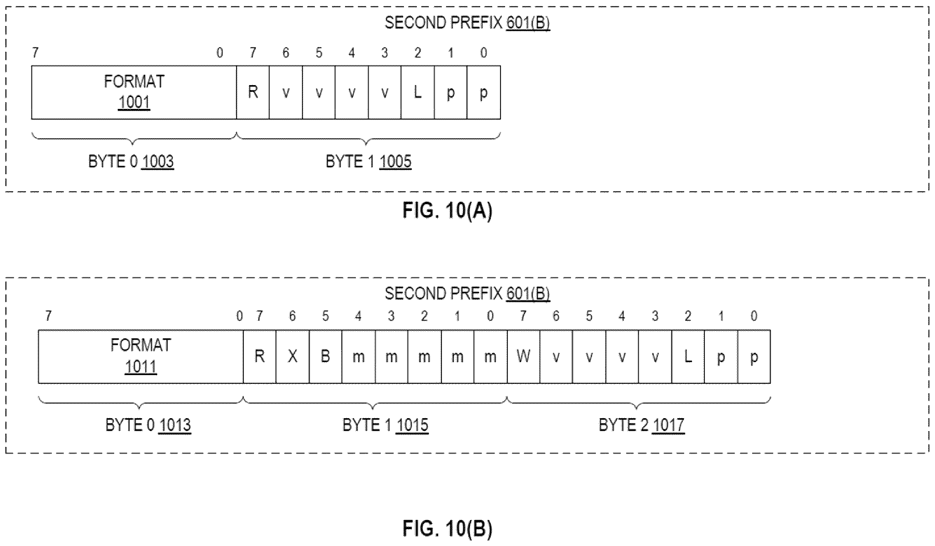

**FIGS. 10(A)-(B)** illustrate embodiments of a second prefix 601(B). In some embodiments, the second prefix 601(B) is an embodiment of a VEX prefix. The second prefix 601(B) encoding allows instructions to have more than two operands, and allows SIMD vector registers (e.g., vector/SIMD registers 510) to be longer than 64-bits (e.g., 128-bit and 256-bit). The use of the second prefix 601(B) provides for three-operand (or more) syntax. For example, previous two-operand instructions performed operations such as A = A + B, which overwrites a source operand. The use of the second prefix 601(B) enables operands to perform nondestructive operations such as A = B + C.

In some embodiments, the second prefix 601(B) comes in two forms - a two-byte form and a three-byte form. The two-byte second prefix 601(B) is used mainly for 128-bit, scalar, and some 256-bit instructions; while the three-byte second prefix 601(B) provides a compact replacement of the first prefix 601(A) and 3-byte opcode instructions.

**FIG. 10(A)** illustrates embodiments of a two-byte form of the second prefix 601(B). In one example, a format field 1001 (byte 0 1003) contains the value C5H. In one example, byte 1 1005 includes a "R" value in bit[7]. This value is the complement of the same value of the first prefix 601(A). Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3] shown as vvvv may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the Mod R/M R/M field 746 to encode the instruction operand that references a memory address or encode either the destination register operand or a source register operand.

Instructions that use this prefix may use the Mod R/M reg field 744 to encode either the destination register operand or a source register operand, be treated as an opcode extension and not used to encode any instruction operand.

For instruction syntax that support four operands, vvvv, the Mod R/M R/M field 746 and the Mod R/M reg field 744 encode three of the four operands. Bits[7:4] of the immediate 609 are then used to encode the third source register operand.

**FIG. 10(B)** illustrates embodiments of a three-byte form of the second prefix 601(B). in one example, a format field 1011 (byte 0 1013) contains the value C4H. Byte 1 1015 includes in bits[7:5] "R," "X," and "B" which are the complements of the same values of the first prefix 601(A). Bits[4:0] of byte 1 1015 (shown as mmmmm) include content to encode, as need, one or more implied leading opcode bytes. For example, 00001 implies a 0FH leading opcode, 00010 implies a 0F38H leading opcode, 00011 implies a leading 0F3AH opcode, etc.

Bit[7] of byte 2 1017 is used similar to W of the first prefix 601(A) including helping to determine promotable operand sizes. Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the Mod R/M R/M field 746 to encode the instruction operand that references a memory address or encode either the destination register operand or a source register operand.

Instructions that use this prefix may use the Mod R/M reg field 744 to encode either the destination register operand or a source register operand, be treated as an opcode extension and not used to encode any instruction operand.

For instruction syntax that support four operands, ww, the Mod R/M R/M field 746, and the Mod R/M reg field 744 encode three of the four operands. Bits[7:4] of the immediate 609 are then used to encode the third source register operand.

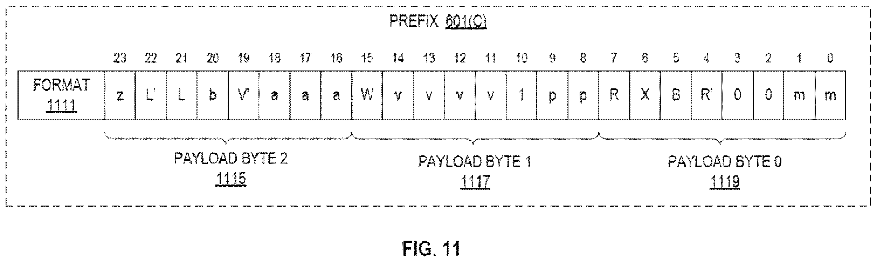

**FIG. 11** illustrates embodiments of a third prefix 601(C). In some embodiments, the first prefix 601(A) is an embodiment of an EVEX prefix. The third prefix 601(C) is a four-byte prefix.

The third prefix 601(C) can encode 32 vector registers (e.g., 128-bit, 256-bit, and 512-bit registers) in 64-bit mode. In some embodiments, instructions that utilize a writemask/opmask (see discussion of registers in a previous figure, such as **FIG. 5**) or predication utilize this prefix. Opmask register allow for conditional processing or selection control. Opmask instructions, whose source/destination operands are opmask registers and treat the content of an opmask register as a single value, are encoded using the second prefix 601(B).

The third prefix 601(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the third prefix 601(C) is a format field 1111 that has a value, in one example, of 62H. Subsequent bytes are referred to as payload bytes 1115-1119 and collectively form a 24-bit value of P[23:0] providing specific capability in the form of one or more fields (detailed herein).

In some embodiments, P[1:0] of payload byte 1119 are identical to the low two mmmmm bits. P[3:2] are reserved in some embodiments. Bit P[4] (R') allows access to the high 16 vector register set when combined with P[7] and the ModR/M reg field 744. P[6] can also provide access to a high 16 vector register when SIB-type addressing is not needed. P[7:5] consist of an R, X, and B which are operand specifier modifier bits for vector register, general purpose register, memory addressing and allow access to the next set of 8 registers beyond the low 8 registers when combined with the ModR/M register field 744 and ModR/M R/M field 746. P[9:8] provide opcode extensionality equivalent to some legacy prefixes (e.g., 00 = no prefix, 01 = 66H, 10 = F3H, and 11 = F2H). P[10] in some embodiments is a fixed value of 1. P[14:11], shown as ww, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

P[15] is similar to W of the first prefix 601(A) and second prefix 611(B) and may serve as an opcode extension bit or operand size promotion.

P[18:16] specify the index of a register in the opmask (writemask) registers (e.g., writemask/predicate registers 515). In one embodiment of the invention, the specific value aaa = 000 has a special behavior implying no opmask is used for the particular instruction (this may be implemented in a variety of ways including the use of a opmask hardwired to all ones or hardware that bypasses the masking hardware). When merging, vector masks allow any set of elements in the destination to be protected from updates during the execution of any operation (specified by the base operation and the augmentation operation); in other one embodiment, preserving the old value of each element of the destination where the corresponding mask bit has a 0. In contrast, when zeroing vector masks allow any set of elements in the destination to be zeroed during the execution of any operation (specified by the base operation and the augmentation operation); in one embodiment, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the opmask field allows for partial vector operations, including loads, stores, arithmetic, logical, etc. While embodiments of the invention are described in which the opmask field's content selects one of a number of opmask registers that contains the opmask to be used (and thus the opmask field's content indirectly identifies that masking to be performed), alternative embodiments instead or additional allow the mask write field's content to directly specify the masking to be performed.

P[19] can be combined with P[14:11] to encode a second source vector register in a nondestructive source syntax which can access an upper 16 vector registers using P[19]. P[20] encodes multiple functionalities, which differs across different classes of instructions and can affect the meaning of the vector length/ rounding control specifier field (P[22:21]). P[23] indicates support for merging-writemasking (e.g., when set to 0) or support for zeroing and merging-writemasking (e.g., when set to 1).

Exemplary embodiments of encoding of registers in instructions using the third prefix 601(C) are detailed in the following tables.

**Table 1:** 32-Register Support in 64-bit Mode

|  | 4 | 3 | [2:0] | REG. TYPE | COMMON USAGES |
|---|---|---|---|---|---|
| **REG** | R' | R | ModR/M reg | GPR, Vector | Destination or Source |
| **VVVV** | V' | vvvv |  | GPR, Vector | 2nd Source or Destination |
| **RM** | X | B | ModR/M R/M | GPR, Vector | 1 st Source or Destination |
| **BASE** | 0 | B | ModR/M R/M | GPR | Memory addressing |
| **INDEX** | 0 | X | SIB.index | GPR | Memory addressing |
| **VIDX** | V' | X | SIB.index | Vector | VSIB memory addressing |

**Table 2:** Encoding Register Specifiers in 32-bit Mode

|  | [2:0] | REG. TYPE | COMMON USAGES |
|---|---|---|---|
| **REG** | ModR/M reg | GPR, Vector | Destination or Source |
| **VVVV** | vvvv | GPR, Vector | 2nd Source or Destination |
| **RM** | ModR/M R/M | GPR, Vector | 1st Source or Destination |
| **BASE** | ModR/M R/M | GPR | Memory addressing |
| **INDEX** | SIB.index | GPR | Memory addressing |
| **VIDX** | SIB.index | Vector | VSIB memory addressing |

**Table 3:** Opmask Register Specifier Encoding

|  | [2:0] | REG. TYPE | COMMON USAGES |
|---|---|---|---|
| **REG** | ModR/M Reg | k0-k7 | Source |
| **VVVV** | vvvv | k0-k7 | 2nd Source |
| **RM** | ModR/M R/M | k0-7 | 1st Source |
| **{k1}** | aaa | k0[1]-k7 | Opmask |

Program code may be applied to input instructions to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), or a microprocessor.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Embodiments of the mechanisms disclosed herein may be implemented in hardware, software, firmware, or a combination of such implementation approaches. Embodiments of the invention may be implemented as computer programs or program code executing on programmable systems comprising at least one processor, a storage system (including volatile and non-volatile memory and/or storage elements), at least one input device, and at least one output device.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritable's (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, embodiments of the invention also include non-transitory, tangible machine-readable media containing instructions or containing design data, such as Hardware Description Language (HDL), which defines structures, circuits, apparatuses, processors and/or system features described herein. Such embodiments may also be referred to as program products.

**Emulation (including binary translation, code morphing, etc.)**

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

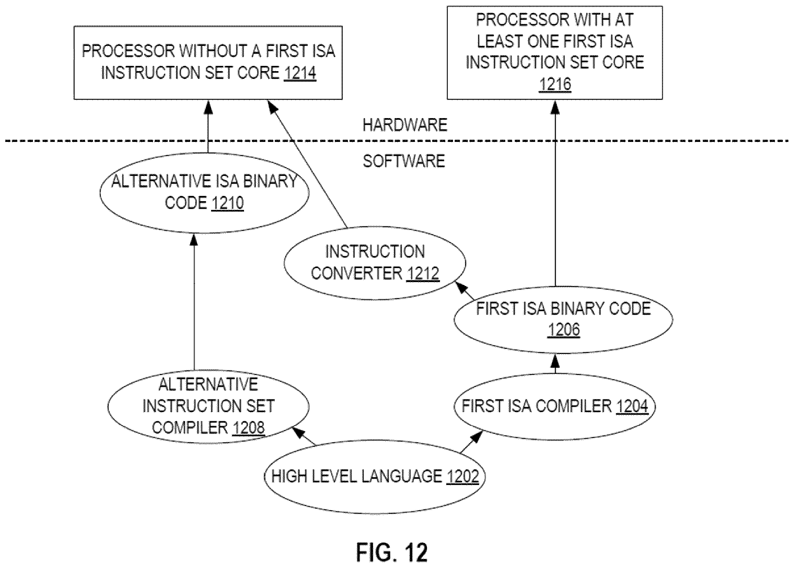

**FIG. 12** illustrates a block diagram contrasting the use of a software instruction converter to convert binary instructions in a source instruction set to binary instructions in a target instruction set according to certain implementations. In the illustrated embodiment, the instruction converter is a software instruction converter, although alternatively the instruction converter may be implemented in software, firmware, hardware, or various combinations thereof. **FIG. 12** shows a program in a high level language 1202 may be compiled using a first ISA compiler 1204 to generate first ISA binary code 1206 that may be natively executed by a processor with at least one first instruction set core 1216. The processor with at least one first ISA instruction set core 1216 represents any processor that can perform substantially the same functions as an Intel® processor with at least one first ISA instruction set core by compatibly executing or otherwise processing (1) a substantial portion of the instruction set of the first ISA instruction set core or (2) object code versions of applications or other software targeted to run on an Intel processor with at least one first ISA instruction set core, in order to achieve substantially the same result as a processor with at least one first ISA instruction set core. The first ISA compiler 1204 represents a compiler that is operable to generate first ISA a binary code 1206 (e.g., object code) that can, with or without additional linkage processing, be executed on the processor with at least one first ISA instruction set core 1216.

Similarly, **FIG. 12** shows the program in the high level language 1202 may be compiled using an alternative instruction set compiler 1208 to generate alternative instruction set binary code 1210 that may be natively executed by a processor without a first ISA instruction set core 1214. The instruction converter 1212 is used to convert the first ISA binary code 1206 into code that may be natively executed by the processor without a first ISA instruction set core 1214. This converted code is not likely to be the same as the alternative instruction set binary code 1210 because an instruction converter capable of this is difficult to make; however, the converted code will accomplish the general operation and be made up of instructions from the alternative instruction set. Thus, the instruction converter 1212 represents software, firmware, hardware, or a combination thereof that, through emulation, simulation or any other process, allows a processor or other electronic device that does not have a first ISA instruction set processor or core to execute the first ISA binary code 1206.

In various embodiments, techniques are provided for managing power and thermal consumption in a heterogeneous (hetero) processor. As used herein the term "hetero processor" refers to a processor including multiple different types of processing engines. For example, a hetero processor may include two or more types of cores that have different microarchitectures, instruction set architectures (ISAs), voltage/frequency (VF) curves, and/or more broadly power/-performance characteristics.

Optimal design/operating point of a heterogeneous processor (in terms of VF characteristics, instructions per cycle (IPC), functionality/ISA, etc.) is dependent on both inherent/static system constraints (e.g., common voltage rail) and a dynamic execution state (e.g., type of workload demand, power/thermal state, etc.). To extract power efficiency and performance from such architectures, embodiments provide techniques to determine/estimate present hardware state/capabilities and to map application software requirements to hardware blocks. With varying power/thermal state of a system, the relative power/performance characteristics of different cores change. Embodiments take these differences into account to make both local and globally optimal decisions. As a result, embodiments provide dynamic feedback of per core power/performance characteristics.

More specifically, embodiments provide closed loop control of resource allocation (e.g., power budget) and operating point selection based on the present state of heterogeneous hardware blocks. In embodiments, a hardware guided scheduling (HGS) interface is provided to communicate dynamic processor capabilities to an operating system (OS) based on power/thermal constraints. Embodiments may dynamically compute hardware (HW) feedback information, including dynamically estimating processor performance and energy efficiency capabilities. As one particular example, a lookup table (LUT) may be accessed based on underlying power and performance (PnP) characteristics of different core types and/or post-silicon tuning based on power/performance bias.

In addition, embodiments may determine an optimal operating point for the heterogeneous processor. Such optimal operating point may be determined based at least in part on a present execution scenario, including varying workload demands (performance, efficiency, responsiveness, throughput, IO response) of different applications, and shifting performance and energy efficiency capabilities of heterogeneous cores.

In embodiments, the dynamically computed processor performance and energy efficiency capabilities may be provided to an OS scheduler. The feedback information takes into account power and thermal constraints to ensure that current hardware state is provided. In this way, an OS scheduler can make scheduling decisions that improve overall system performance and efficiency. Note that this feedback is not dependent on workload energy performance preference (EPP) or other software input. Rather, it is based on physical constraints that reflect current hardware state.

In contrast, conventional power management mechanisms assume all cores to be of the same type, and thus estimate the maximum achievable frequency on each core to be same for a given power budget. This is not accurate, as different cores may have different power/performance capabilities individually and they may have different maximum frequency based on other platform constraints. And further, conventional power management algorithms assume the same utilization target for all cores when calculating performance state (P-state) and hence do not take into account the heterogeneity of an underlying architecture. Nor do existing techniques optimize the operating points with an objective of mapping a particular type of thread to a core type based on optimizing power or performance.

In general, a HGS interface provides dynamic processor capabilities to the OS based on power/thermal constraints. The OS takes this feedback as an input to a scheduling algorithm and maps workload demand to hetero compute units. The scheduler's mapping decisions may be guided by different metrics such as performance, efficiency or responsiveness, etc. The scheduling decisions in turn impact processor states, hence forming a closed loop dependence. Since workload demand, in terms of power/performance requirements, can vary by large margins, any change in scheduling decisions can cause a large shift in HGS feedback, leading to unacceptable stability issues. Embodiments provide techniques that are independent/resilient of the scheduling decisions or other software inputs from the operating system, and thus avoid these stability issues.

Although the following embodiments are described with reference to specific integrated circuits, such as in computing platforms or processors, other embodiments are applicable to other types of integrated circuits and logic devices. Similar techniques and teachings of embodiments described herein may be applied to other types of circuits or semiconductor devices that may also benefit from better energy efficiency and energy conservation. For example, the disclosed embodiments are not limited to any particular type of computer systems. That is, disclosed embodiments can be used in many different system types, ranging from server computers (e.g., tower, rack, blade, micro-server and so forth), communications systems, storage systems, desktop computers of any configuration, laptop, notebook, and tablet computers (including 2:1 tablets, phablets and so forth), and may be also used in other devices, such as handheld devices, systems on chip (SoCs), and embedded applications. Some examples of handheld devices include cellular phones such as smartphones, Internet protocol devices, digital cameras, personal digital assistants (PDAs), and handheld PCs. Embedded applications may typically include a microcontroller, a digital signal processor (DSP), network computers (NetPC), set-top boxes, network hubs, wide area network (WAN) switches, wearable devices, or any other system that can perform the functions and operations taught below. More so, embodiments may be implemented in mobile terminals having standard voice functionality such as mobile phones, smartphones and phablets, and/or in non-mobile terminals without a standard wireless voice function communication capability, such as many wearables, tablets, notebooks, desktops, micro-servers, servers and so forth. Moreover, the apparatuses, methods, and systems described herein are not limited to physical computing devices, but may also relate to software optimizations.

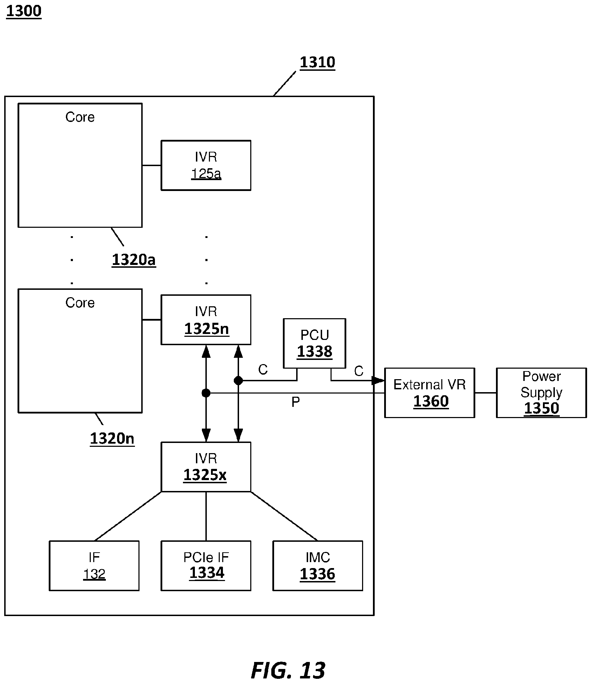

Referring now to **Figure 13,** shown is a block diagram of a portion of a system in accordance with an embodiment of the present invention. As shown in **Figure 13,** system 1300 may include various components, including a processor 1310 which as shown is a multicore processor. Processor 1310 may be coupled to a power supply 1350 via an external voltage regulator 1360, which may perform a first voltage conversion to provide a primary regulated voltage to processor 1310.

As seen, processor 1310 may be a single die processor including multiple cores 1320 a-1320 n. In addition, each core may be associated with an integrated voltage regulator (IVR) 1325 a-1325 n which receives the primary regulated voltage and generates an operating voltage to be provided to one or more agents of the processor associated with the IVR. Accordingly, an IVR implementation may be provided to allow for fine-grained control of voltage and thus power and performance of each individual core. As such, each core can operate at an independent voltage and frequency, enabling great flexibility and affording wide opportunities for balancing power consumption with performance. In some embodiments, the use of multiple IVRs enables the grouping of components into separate power planes, such that power is regulated and supplied by the IVR to only those components in the group. During power management, a given power plane of one IVR may be powered down or off when the processor is placed into a certain low power state, while another power plane of another IVR remains active, or fully powered.

Still referring to **Figure 13,** additional components may be present within the processor including an input/output interface 1332, another interface 1334, and an integrated memory controller 1336. As seen, each of these components may be powered by another integrated voltage regulator 1325 x. In one embodiment, interface 1332 may be enable operation for an Intel® Quick Path Interconnect (QPI) interconnect, which provides for point-to-point (PtP) links in a cache coherent protocol that includes multiple layers including a physical layer, a link layer and a protocol layer. In turn, interface 1334 may communicate via a Peripheral Component Interconnect Express (PCIe™) protocol.

Also shown is a power control unit (PCU) 1338, which may include hardware, software and/or firmware to perform power management operations with regard to processor 1310. As seen, PCU 1338 provides control information to external voltage regulator 1360 via a digital interface to cause the voltage regulator to generate the appropriate regulated voltage. PCU 1338 also provides control information to IVRs 1325 via another digital interface to control the operating voltage generated (or to cause a corresponding IVR to be disabled in a low power mode). In various embodiments, PCU 1338 may include a variety of power management logic units to perform hardware-based power management. Such power management may be wholly processor controlled (e.g., by various processor hardware, and which may be triggered by workload and/or power, thermal or other processor constraints) and/or the power management may be performed responsive to external sources (such as a platform or management power management source or system software).

In embodiments herein, PCU 1338 may be configured to dynamically determine hardware feedback information regarding performance and energy efficiency capabilities of hardware circuits such as cores 1320 and provide an interface to enable communication of this information to an OS scheduler, for use in making better scheduling decisions. To this end, PCU 1338 may be configured to determine and store such information, either internally to PCU 1338 or in another storage of system 1300.

Furthermore, while Figure 13 shows an implementation in which PCU 1338 is a separate processing engine (which may be implemented as a microcontroller), understand that in some cases in addition to or instead of a dedicated power controller, each core may include or be associated with a power control agent to more autonomously control power consumption independently. In some cases a hierarchical power management architecture may be provided, with PCU 1338 in communication with corresponding power management agents associated with each of cores 1320.

While not shown for ease of illustration, understand that additional components may be present within processor 1310 such as uncore logic, and other components such as internal memories, e.g., one or more levels of a cache memory hierarchy and so forth. Furthermore, while shown in the implementation of Figure 13 with an integrated voltage regulator, embodiments are not so limited.

Processors described herein may leverage power management techniques that may be independent of and complementary to an operating system (OS)-based power management (OSPM) mechanism. According to one example OSPM technique, a processor can operate at various performance states or levels, so-called P-states, namely from P0 to PN. In general, the P1 performance state may correspond to the highest guaranteed performance state that can be requested by an OS. In addition to this P1 state, the OS can further request a higher performance state, namely a P0 state. This P0 state may thus be an opportunistic or turbo mode state in which, when power and/or thermal budget is available, processor hardware can configure the processor or at least portions thereof to operate at a higher than guaranteed frequency. In many implementations a processor can include multiple so-called bin frequencies above the P1 guaranteed maximum frequency, exceeding to a maximum peak frequency of the particular processor, as fused or otherwise written into the processor during manufacture. In addition, according to one OSPM mechanism, a processor can operate at various power states or levels. With regard to power states, an OSPM mechanism may specify different power consumption states, generally referred to as C-states, C0, C1 to Cn states. When a core is active, it runs at a C0 state, and when the core is idle it may be placed in a core low power state, also called a core non-zero C-state (e.g., C1-C6 states), with each C-state being at a lower power consumption level (such that C6 is a deeper low power state than C1, and so forth).

Understand that many different types of power management techniques may be used individually or in combination in different embodiments. As representative examples, a power controller may control the processor to be power managed by some form of dynamic voltage frequency scaling (DVFS) in which an operating voltage and/or operating frequency of one or more cores or other processor logic may be dynamically controlled to reduce power consumption in certain situations. In an example, DVFS may be performed using Enhanced Intel SpeedStep™ technology available from Intel Corporation, Santa Clara, Calif., to provide optimal performance at a lowest power consumption level. In another example, DVFS may be performed using Intel TurboBoost™ technology to enable one or more cores or other compute engines to operate at a higher than guaranteed operating frequency based on conditions (e.g., workload and availability).

Another power management technique that may be used in certain examples is dynamic swapping of workloads between different compute engines. For example, the processor may include asymmetric cores or other processing engines that operate at different power consumption levels, such that in a power constrained situation, one or more workloads can be dynamically switched to execute on a lower power core or other compute engine. Another exemplary power management technique is hardware duty cycling (HDC), which may cause cores and/or other compute engines to be periodically enabled and disabled according to a duty cycle, such that one or more cores may be made inactive during an inactive period of the duty cycle and made active during an active period of the duty cycle.

APPARATUS AND METHOD FOR ADAPTIVELY SCHEDULING

WORK ON HETEROGENEOUS PROCESSING RESOURCES

When a new thread is to be executed, the embodiments described below identify the class associated with the thread (or the default class) and select the logical processor available within that class having the highest performance and/or best energy efficiency values. If the optimal logical processor is not available, one embodiment of the invention determines the next best logical processor and either schedules the new thread for execution on the next best performance or energy cores, or migrates a running thread from the optimal logical processor to make room for the new thread. In one embodiment, the decision to migrate or not migrate the running thread is based on a comparison of performance and/or energy values associated with the new thread and the running thread. In one implementation, it is up to the OS to choose the appropriate scheduling method per software thread, ether based on energy consumption (e.g., for low power environments) or best performance

As used herein, a logical processor (LP) may comprise a processor core or a specified portion of a processor core (e.g., a hardware thread on the processor core). For example, a single threaded core may map directly to one logical processor whereas an SMT core may map to multiple logical processors. If the SMT core is capable of simultaneously executing N threads, for example, then N logical processors may be mapped to the SMT core (e.g., one for each simultaneous thread). In this example, N may be any value based on the capabilities of the SMT core (e.g., 2, 4, 8, etc). Other execution resources may be associated with a logical processor such as an allocated memory space and/or portion of a cache.

In some case, the platform may include a mix of cores, some of which include SMT support and some of which do not. In some cases, the performance and energy results of a core that has SMT support may be better than results on a non-SMT core when running more than one software thread. In other cases, the non-SMT core may provide better performance/energy results. Thus, in one embodiment, the scheduling order is: (1) schedule first on the core with highest performance / energy; (2) second, scheduled on the core with the lower perf / energy capabilities; and (3) finally, schedule on the core with SMT support.

It has been observed that random scheduling of threads from different types of workloads on a set of heterogeneous cores can result in lower performance than would be possible when compared with more intelligent allocation mechanisms.

In some embodiments described below, the "small cores" are Atom processors and the "big cores" are Core i3, i5, i7, or i9 cores. These cores may be integrated on the same die and/or interconnected on the same processor package. Note, however, that the underlying principles of the invention are not limited to any particular processor architecture or any specific type of processor or core.

At the same amount of power, a small core such as an Atom processor may provide higher performance than that of a big core. This power/performance cross point is a function of the ratio of big core IPC over small core IPC (i.e., $IPC_B/IPC_S$) which is particularly impacted for single threads or a small number of threads. The different $IPC_B/IPC_S$ values also impact the potential to reduce energy in order to improve battery life. As the ratio decreases, scheduling work on big cores becomes less attractive from an energy savings perspective.

In one embodiment, different classes are defined for different types of workloads. In particular, one embodiment defines a first class of workloads with an $IPC_B/IPC_S$ ratio below 1.3, a second class of workloads with an $IPC_B/IPC_S$ ratio below 1.5, and a third class of workloads with an $IPC_B/IPC_S$ ratio above (or equal to) 1.5.

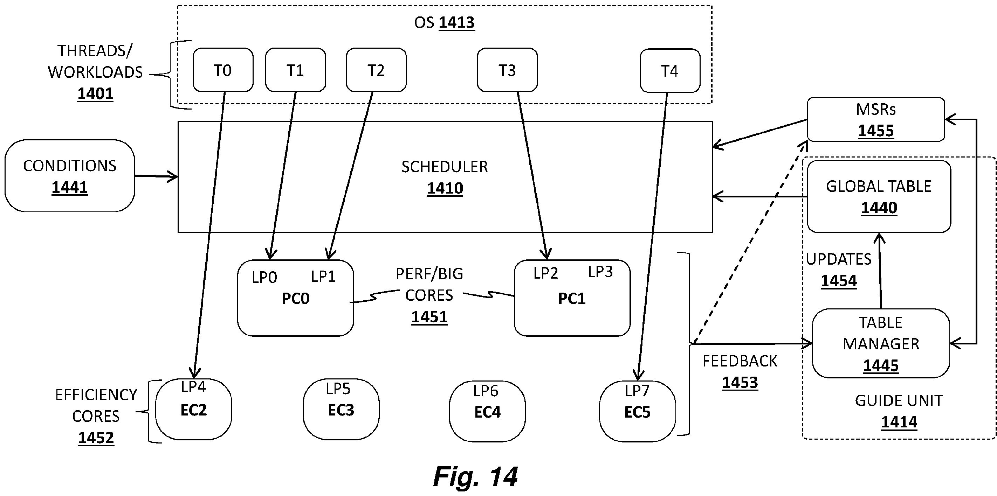

One embodiment of the invention maintains a global view of the performance and energy data associated with different workloads and core types as well as different classes of big/little IPC values. As shown in **Figure 14,** in one implementation, this is accomplished with a global table 1440 which stores the performance, energy, and other data for each type of core 1451-1452 and/or logical processor (LP). The global table 1440 and other logic shown in **Figure 14** (e.g., table manager 1445) may be implemented in hardware or by a combination of hardware and software.

For the purpose of illustration, two types of cores are shown in **Figure 14:** performance cores 1451 (sometimes referred to as "big" cores) and efficiency cores 1452 (sometimes referred to as "little" cores). Note, however, that various additional cores and alternate combinations of big/little cores may be used. For example, some embodiments described below implement a disaggregated architecture in which an SoC/IO tile includes one or more cores (which may be selected during low utilization conditions so that the compute tiles can be moved into low power states).

In one embodiment, a scheduler 1410 maps threads/workloads 1401 to cores 1451-1452 and/or logical processors LP0-LP7 based on current operating conditions 1441 and the performance and energy data from a global table 1440 (described in greater detail below). In one embodiment, the scheduler 1410 relies on (or includes) a guide/mapping unit 1414 to evaluate different thread/logical processor mappings in view of the global table 1440 to determine which thread should be mapped to which logical processor. The scheduler 1410 may then implement the mapping. The scheduler 1410, guide/mapping unit 1414, table manager 1445, and global table 1440 may be implemented in hardware/circuitry programmed by software (e.g., by setting register values) or by a combination of hardware and software.

The currently detected operating conditions 1441 may include variables related to power consumption and temperature, and may determine whether to choose efficiency values or performance values based on these conditions. For example, if the computing system is a mobile device, then the scheduler 1410 may perform mapping using efficiency options more frequently, depending on whether the mobile device is currently powered by a battery or plugged into an electrical outlet. Similarly, if the battery level of the mobile computing system is low, then the scheduler 1410 may tend to favor efficiency options (unless it would be more efficient to use a large core for a shorter period of time). As another example, if a significant amount of power of the overall power budget of the system is being consumed by another processor component (e.g., the graphics processing unit is performing graphics-intensive operations), then the scheduler 1410 may perform an efficiency mapping to ensure that the power budget is not breached.

One embodiment of a global table 1440, shown below as Table B, specifies different energy efficiency and performance values for each core 1451-1452 within each defined class (e.g., $Eff_{02}$, $Perf_{11}$, etc). The cores are associated with a logical processor number (LP0-LPn) and each logical processor may represent any type of physical core or any defined portion of a physical core, including an entire core.

In one embodiment, a table manager 1445 performs updates to the global table 1440 based on feedback 1453 related to the execution of the different threads/workloads 1401. The feedback may be stored in one or more MSRs 1455 and read by the table manager 1445.

The first time a thread/workload is executed, it may be assigned a default class (e.g., Class 0). The table manager 1445 then analyzes the feedback results when executed in the default class, and if a more efficient categorization is available, the table manager 1445 assigns this particular thread/workload to a different class. In one embodiment, the feedback 1453 is used in one embodiment to generate an index into the global table 1440. The classes in this embodiment are created based on ranges of $IPC_B/IPC_S$ as described above.

**TABLE B**

| Class 2 | | Class 1 | | Class 0 | | Cores |
|---|---|---|---|---|---|---|
| Energy Eff. | Perf | Energy Eff. | Perf | Energy Eff. | Perf | |
| $Eff_{02}$ | $Perf_{02}$ | $Eff_{01}$ | $Perf_{01}$ | $Eff_{00}$ | $Perf_{00}$ | LP0 |
| $Eff_{12}$ | $Perf_{12}$ | $Eff_{11}$ | $Perf_{11}$ | $Eff_{10}$ | $Perf_{10}$ | LP1 |
| | | | | | | .. |
| $Eff_{n2}$ | $Perf_{n2}$ | $Eff_{n1}$ | $Perf_{n1}$ | $Eff_{n0}$ | $Perf_{n0}$ | LPn |

In one embodiment, the scheduler 1410 uses the global table 1440 and associated information to realize a global view of the different core types and corresponding performance and energy metrics for different classes. Extensions to existing schedulers may add new columns per class type. In one embodiment, the different classes enable an operating system or software scheduler to choose different allocation mechanisms for a workload based on the class of that workload.

In one embodiment, Class 0 is defined as a default class which maintains legacy support and represents the median case of the curve. In this embodiment, the guide/mapping unit 1414 and/or scheduler 1410 uses this default class when no valid data has been collected for the current thread. As described above, the table manager 1445 may evaluate feedback 1453 related to the execution of the thread in the default class and provide an update 1454 to the global table 1440 if a different class is more appropriate. For example, it may categorize the thread into Class 1 if the $IPC_B/IPC_S$ ratio of the thread is greater than a first specified threshold (e.g., 1.5) and categorize the thread into Class 2 if the $IPC_B/IPC_S$ ratio is less than a second threshold (e.g., 1.3).

The different columns per class in the global table 1440 may be specified via one or more control registers. For example, in an x86 implementation, the columns may be enumerated by CPUID[6].EDX[7:0] (e.g., for a table with 7-1 different columns per class). The operating system (OS) 1413 and/or scheduler 1410 can learn which line is relevant for each logical processor by one or more bits in EDX (e.g., CPUID.6.EDX[31-16] = n, where n is the index position which the logical processor's line is set) and can also determine the number of classes via a value in EDX (e.g., indicated by CPUID.6.EDX[11:8]). The OS can calculate the location of each logical processor line in the HGS table by the following technique:

If advanced hardware guided scheduling (e.g., HGS+) is enabled HGS Base Addr + 8 + FLOOR((# of classes * # of support capabilities bitmap set bits -1)/ 8+ 1) * 8 *( LPn row index +1)

else ( advanced hardware guided scheduling is disabled and basic hardware guided scheduling is enabled)

HGS Base Addr + 8 + <u>8</u> * ( LPn row index +1)

The size of the HGS table can be enumerated by CPUID[6].EDX[11:8]

The OS can enumerate about the legacy HGS basic support from CPUID[6].EAX[19] and about the newer HGS+ support from CPUID[6].EAX[23]

In one embodiment, the performance capability values are non-semantic and do not necessarily reflect actual performance.

The performance columns in the table store relative performance values between the logical processors represented in the different rows. One embodiment of the interface provides for sharing of lines with a plurality of different logical processors that belong to the same core type, thereby providing for reasonable comparisons.

For each defined class, the ratio of performance values between cores within the same column such as

$$Perf_{ijk} = \frac{Perf_{ik}}{Perf_{jk}}$$ provides a rough comparison but does not provide an actual performance value. Similarly, the ratio of energy efficiency values in a column such as $Enery_{ijk}$ = $\frac{Energy_{ik}}{Energy_{jk}}$ for each logical processor provides a relative comparison, but does not reflect the actual energy consumed.

In one embodiment, the table manager 1445 updates the global table 1440 when the relative performance or energy value has experienced a significant change that can impact scheduling, such as when the order between the cores or the difference between the cores changes. These changes can be specified in one or more columns and, for each column that was updated, the column header is marked to indicate that the change was made. In addition, a status bit may be set in a control register to indicate that an update occurred. For example, in some x86 implementations, the status bit is set in a particular model-specific register (MSR).

The global table 1440 can be updated dynamically as a result of physical limitations such as power or thermal limitations. As a result, part or all of the performance and energy class value columns may be updated and the order in which a core with the best performance or energy is selected may be changed.

When updates like this happen, the hardware marks the column(s) that was updated in the global table 1440 (e.g., in the column header field). In addition, in one embodiment, the time stamp field is updated to mark the last update of the table.

In addition, the thermal status registers may also be updated and, if permitted by the OS, the thermal interrupts. An interrupt may also be generated to notify the OS about the changes. Following the setting of the thermal updates, the table manager 1445 may not update the global table 1440 any more until permitted by the OS (e.g., the OS clears the log bit). This is done in order to avoid making changes while the OS is reading the table.

Given that that different classes may be impacted in a different way for different physical limitations, one embodiment of the invention provides the ability to update only selected table classes. This configurability provides for optimal results even when the physical conditions are changed. Following an indication that the order of the class performance or energy is changed, the OS may reschedule software threads in accordance with each software thread's class index.

In one embodiment, in response to detected changes, a thread-level MSR 1455 reports the index into the current thread column to the OS 1413 and/or scheduler 1410 as well as a valid bit to indicate whether the reported data is valid. For example, for a thread-level MSR 1455, the following bits may provide indications for RTC (run time characteristics):

Bit 7:0 - Application class index of the table, representing the latest "Application Class" executed on this hardware thread;
Bit 63-Valid bit; if set to 1, the OS/scheduler can use it, otherwise the class index should be ignored

In one embodiment, the valid bit is set or cleared based on the current state and operational characteristics of the microarchitecture. For example, the data may not be valid following a context switch of a new thread 1401 until the hardware (e.g., the table manager 1445) can evaluate or otherwise determine the characteristics of the new thread. The valid bit may also be adjusted when transitioning between specific security code flows. In circumstances where the valid bit is not set, the scheduler 1410 may ignore the feedback data and use the last index known to be valid.

In one embodiment, the OS 1413 and/or scheduler 1410 reads this MSR 1455 when swapping out a context in order to have the most up-to-date information for the next context swapped in. The OS 1413 and/or scheduler 1410 can also read the MSR 1455 dynamically during runtime of the current software thread. For example, the OS/scheduler may read the MSR 1455 on each tick of the scheduler 1410.

In order for the hardware (e.g., the table manager 1445) to have the time required to learn about the new thread and ensure the validity of the report index after the new context is swapped in, one embodiment of the invention provides the option to save and restore the microarchitectural metadata that includes the history of the index detection. In one implementation, this is accomplished using the MSR 1455 which can be ether read or written as a regular MSR or by utilizing the processor's save and restore mechanisms (e.g., such as XSAVES/XRESROS on an x86 implementation). For example:

Thread level Scope MSR (Read/Write)

Bit 63:0 - software thread, hardware feedback history metadata.

In one implementation, the OS 1413 and/or scheduler 1410 reads this metadata when swapping in the thread and updates it during execution and/or when swapping out the same thread.

In some implementations where metadata is not supported, prediction history is still need to be reset during a context switch in order to enable valid feedback that will not be impacted from previous execution of the software thread. This reset data may be enabled if the OS is configured to "opt-in" support of history reset every time that IA32_KENTEL_GS_BASE is executed. Other OS-based context switch techniques that include H/W architecture methods may also be used in order to reset the hardware guided scheduling prediction history during context switches. In another embodiment, a specific MSR is enabled with a control bit that forces resetting the history. This control MSR can be ether saved and restored by XSAVES/XRESORS or manually used by the OS on every context switch. other option can be that every time that the value of this MSR be zero, write or restore this MSR will reset the hardware guided scheduling history, Another embodiment resets the history via a thread level config MSR (as described below) that enables the option for the OS to manually reset the history.

The OS 1413 and/or scheduler 1410 can enable and disable the extension of the global table 1440 via an MSR control bit. This may be done, for example, to avoid conflicts with legacy implementations and/or to avoid power leakage. For example, the operating system may dynamically disable the features described herein when running on legacy systems. While disabled, the feedback MSR thread level report is invalid. Enabling can be done at the logical processor level in order to provide, for example, the VMM the option to enable the techniques described herein for part of an SoC based on each VM usage mode (including whether the VM supports these techniques).

In one particular embodiment, the thread level configuration is implemented as follows:

IA32_HW_FEEDBACK THREAD CONFIG provides Read/Write thread level scope (0x17D3)

- Bit 0: Enables logical processor support for the scheduling techniques described herein. When set to 1, enables the support of the thread level hardware feedback and resets its history. Default: 0.

- Bit 1: WRMSR_IA32_KERNEL_GS_BASE_CLEAR_HGS_HISTORY, when set, WRMSR of IA32_KERNEL_GS_BASE resets the prediction history. Default: 0

- Bit 2: Reset the history command bit, always reads as 0, reset the prediction history when set (written with '1')

In one implementation, the enabling and disabling is performed via a package-level MSR. For example, in an x86 implementation the following MSR may be specified:

IA32_HW_FEEDBACK_CONFIG

Bit 0 - Enable. When set to 1, this bit enables the hardware feedback interface described herein. The default is 0.
Bit 1 - Enable. When set to 1, this bit enables multiple class support. The extra classes columns in the global table 1440 are valid only while bit 1 is set. Setting this bit enables the thread level feedback 1453 sent to the MSR 1455 to support valid report class indices.

As mentioned, when a new thread is to be executed, embodiments of the invention identify the class associated with the thread (or the default class) and select the logical processor (LP) available within that class having the highest performance and/or best energy efficiency values (depending on the current desired power consumption). If the optimal logical processor is not available, one embodiment of the invention determines the next best logical processor and either schedules the new thread for execution on the next best logical processor, or migrates a running thread from the optimal logical processor to make room for the new thread. In one embodiment, the decision to migrate or not migrate the running thread is based on a comparison of performance and/or energy values associated with the new thread and the running thread.

For a "High Priority" thread, the relevant column is determined based on the thread class index (k). In one embodiment, the index is provided by a feedback MSR 1455. On the thread performance class column (k), a row is identified with the highest performance value. If the corresponding logical processor is free, then the thread is scheduled on this logical processor.

Alternatively, if all highest performance logical processors are occupied, the performance class column (k) is then searched for a free logical processor, working from highest to lowest performance values. When one is located, the thread may be scheduled on the free logical processor or a running thread may be migrated from the preferred logical processor and the new thread may be scheduled on the preferred logical processor.

In this embodiment, the scheduler 1410 may evaluate whether to migrate an existing thread to a different logical processor to ensure a fair distribution of processing resources. In one embodiment, comparisons are made between the different performance values of the different threads and logical processors to render this decision, as described below.

Thus, in one embodiment, when a new thread must be scheduled for execution on a logical processor, the index of the new thread (I) is used to search for a free logical processor in the performance class associated with the new thread (e.g., one of the columns in the global table 1440). If there is an idle logical processor with the highest performance value then the new thread is scheduled on the idle logical processor. If not, then a secondary logical processor is identified. For example, the scheduler may search down the column in the global table 1440 to identify the logical processor having the second highest performance value.

An evaluation may be performed to determine whether to migrate any running threads from a logical processor which would be a highest performance LP for the new thread to a different logical processor to make room for the new thread on the highest performance logical processor. In one embodiment, this evaluation involves a comparison of the performance values of the running thread and the new thread on the highest performance logical processor and one or more alternate logical processors. For the new thread, the alternate logical processor comprises the secondary processor (i.e., which will provide the next highest performance for the new thread). For the running thread, the alternate logical processor may comprise the secondary logical processor (if it will provide the second highest performance) or another logical processor (if it will provide the second highest performance).

In one particular implementation, the ratio of the performance on highest performance LP over performance on the alternate LP for both the new thread and the running thread. If the ratio for the new thread is greater, then the running thread is migrated to its alternate logical processor. if the ratio for the running thread is greater, then the new thread will be scheduled on its alternate logical processor. The following are example ratio calculations:

$$New\ Thread\ Comp\ Value = Perf_{new\ thread\ highest}/Perf_{new\ thread\ alternate}$$

$$Running\ Thread\ Comp\ Value = Perf_{running\ thread\ highest}/Perf_{running\ thread\ alternate}$$

If the above ratio is greater for the new thread, then the running thread is migrated to its alternate logical processor (i.e., the LP on which it will have the second highest performance) and new thread is scheduled to execute on its highest performance logical processor. If the ratio is greater for the running thread, then the new thread is scheduled on the secondary LP (which will provide it with the second highest performance).

In one embodiment, when energy efficiency is selected as the determining factor, the same techniques as described above are implemented to determine the logical processor for the new thread but using the efficiency class data from the global table 1440 instead of the performance class data. For example, the index of the new thread (I) is used to search for a free logical processor in the efficiency class associated with the new thread. If there is an idle logical processor with the highest efficiency value, then the new thread is scheduled on the idle logical processor. If not, then a secondary logical processor is identified. For example, the scheduler may search down the column in the global table 1440 to identify the logical processor having the second best efficiency value. An evaluation is performed to determine whether to migrate any running threads from a logical processor which would be a highest efficiency LP for the new thread to a different logical processor to make room for the new thread. To render this decision, efficiency ratios may be determined as described above for performance:

$$New\ Thread\ Comp\ Value = Eff_{new\ thread\ highest}/Eff_{new\ thread\ alternate}$$

$$Running\ Thread\ Comp\ Value = Eff_{running\ thread\ highest}/Eff_{running\ thread\ alternate}$$

As with performance, the thread with the larger index is executed on the highest efficiency logical processor, while the other thread is run (or migrated) to an alternate logical processor.

The above analysis may be performed to allocate and migrate threads in the same or different performance and efficiency classes. If the new thread has a different class index as the other threads in busy logical processors, then the performance or efficiency ratio is determined using the highest performance or efficiency value over the next best performance or efficiency value for each of the threads currently running and/or new threads to be scheduled. Those threads with the highest ratios are then allocated to the highest performance or efficiency logical processors while the others are scheduled (or migrated) on the next best performance or efficiency logical processors.

In one embodiment, in order to migrate a running thread, the ratio of the new thread must be greater than the running thread by a specified threshold amount. In one embodiment, this threshold value is selected based on the amount of overhead required to migrate the running thread to the new logical processor (e.g., the processing resources, energy, and time consumed by the migration). This ensures that if the ratio of the new thread is only slightly higher than that of the running thread, then the running thread will not be migrated.

In one embodiment, the scheduler 1410 performs a thread allocation analysis periodically (e.g., every 15ms, 20ms, etc) to perform the above performance and/or efficiency comparisons. If a higher performance or improved energy efficiency option is available, it will then migrate one or more threads between logical processors to achieve this higher performance or higher efficiency option.

Some existing scheduling implementations provide a global view of the performance and energy characteristics of different core/processor types. However, these implementations assume the same level of big/little IPCs and take the median value of all possible traces while ignoring the actual differences between different types of software threads. The embodiments of the invention address this limitation by considering these differences.

Apparatus and Method for Dynamic Core Management

Various embodiments of the invention evaluate different types of core parking and core consolidation hints, requests, and other relevant conditions to generate a resolved hardware-guided scheduling (HGS) hint, while architecturally meeting the requirements of dynamic core parking scenarios that may mall coexist in the processor. Some embodiments coordinate with the OS scheduler to determine a specific set of cores to be parked or consolidated in view of runtime metrics such as core utilization, thread performance, memory dependencies, core topology, and voltage-frequency curves. At least one embodiment allocates a power budget to different IP blocks in the processor to deliver a desired performance, recognizing the differences in the relative priority of each type of compute block as well as the differences in the power/frequency and frequency/performance relationships in each of the compute blocks. Some implementations allocate the power budget in view of a disaggregated, heterogeneous processor architecture with separate compute tiles, SoC tiles, graphics tiles, and IO tiles.

As used herein, a "parking" hint refers to a request or recommendation to avoid using specific cores (e.g., thereby "parking" the cores). The parking hints and other types of hints described herein may be communicated via a hardware feedback interface (HFI) storage such as a register (e.g., an MSR) or memory region allocated by the operating system (OS).

Currently, parking hints have the disadvantage of hiding the performance capabilities of the parked cores from the OS. As a result, when the OS has high priority work that no longer fits within the available cores, and it wants to run that work on a high performance core, it has no information as to what core to use.

A "consolidation" hint is a request generated to consolidate efficient work to a subset of the cores on the processor. In existing implementations, the OS may erroneously interpret this hint as a request to consolidate all work on this subset of cores, even if lower priority work must be deferred. A particular type of consolidation, referred to as "below PE consolidation" (BPC) attempts to contain the number of cores to bring the per-core frequency above a limit when the system is frequency limited.

Processor "survivability" features are activated when there are thermal and/or electrical reasons to reduce the number of cores to avoid shut down of the processor. In some implementations, survivability causes cores to be parked rather than contained to ensure that the OS will not start using more cores than hinted. In some embodiments, parking starts with the most power-consuming cores. For example, in the disaggregated architectures described below, the parking order may be: highest performance big cores (e.g., ULT big cores), big cores, compute die small cores (e.g., compute die Atom cores), and SoC die small core (e.g., SoC die Atom cores). In the final stages, the SoC may run out of a single SoC die core. In one embodiment, when only a single efficient core is active, the survivability feature is deactivated. Because this feature is critical, it overrides other hints/configuration settings; at the same time this condition is not expected to occur very often.

In some embodiments, because the goal of both below BPC and survivability is to reduce the number of cores, when BPC and survivability both are active, BPC is bypassed to avoid aggressive constraining when not required.

Various hardware-based techniques may be used for optimizing active cores. For example, with Hardware Guided Scheduling (HGS) (e.g., as implemented on hardware guide unit 1414 described above), hints may be provided to the OS to not schedule work on a subset of cores (core parking) and/or hints to only schedule the work on a subset of cores (core consolidation), with the goal of improving overall power and performance (PnP). Some embodiments of the invention determine a specific set of cores to be parked or consolidated in view of the disaggregated architecture of the processor, various runtime metrics (e.g., core utilization, temperature), thread performance, memory dependencies, core topology, and voltage-frequency curves.

Examples of Heterogeneous Processors

and Power Management Architectures

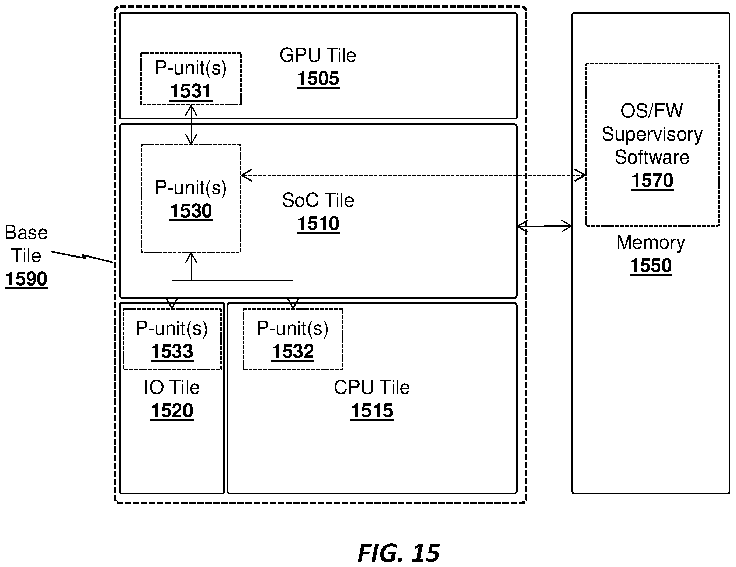

**Figure 15** illustrates an example of a processor with a disaggregated architecture comprising an SoC tile 1510, a CPU tile 1515, A GPU tile 1505, and an IO tile 1520 which are integrated on a common base tile 1590 coupled to a package substrate. In some embodiments, each tile comprises a separate die or chip which communicates with other dies/chips over horizontal and/or vertical interconnects (e.g., through-silicon vias). The SoC tile 1510 includes a memory controller to couple the processor to system memory 1550 and provides various other SoC-level functions such as coherent fabric interconnects between the various IP blocks, a display engine, and a low-power IP block which remains operational, even when the processor enters into low power states.

Some embodiments implement a distributed power management architecture comprising a plurality of power management units (P-units) 1530-1533 distributed across the various dies 1505, 1510, 1515, 1520, respectively. In certain implementations, the P-units 1530-1533 are configured as a hierarchical power management subsystem in which a single P-unit (e.g., the P-unit 1530 on the SoC tile 1510 in several examples described herein) operates as a supervisor P-unit which collects and evaluates power management metrics provided from the other P-units 1531-1533 to make package-level power management decisions and determine power/performance states at which each of the tiles and/or individual IP blocks are to operate (e.g., the frequencies and voltages for each of the IP blocks).

The supervisor P-unit 1530 communicates the power/performance states to the other P-units 1531-1533, which implement the power/performance states locally, on each respective tile. In some implementation, the package-wide power management decisions of the supervisor P-unit 1530 include decisions described herein involving core parking and/or core consolidation.

An operating system (OS) and/or other supervisory firmware (FW) or software (SW) 1570 may communicate with the supervisory P-unit 1530 to exchange power management state information and power management requests (e.g., such as the "hints" described herein). The hardware guide unit 1414 and associated tables may be implemented in the supervisor P-unit 1530 and/or the SoC tile 1510. In some implementations described herein, the communication between the OS/supervisory FW/SW 1570 and the P-unit 1530 occurs via a mailbox register or set of mailbox registers. In some embodiments, a Baseboard Management Controller (BMC) or other system controller may exchange power control messages with the supervisory P-unit 1530 via these mailbox registers or a different set of mailbox registers.

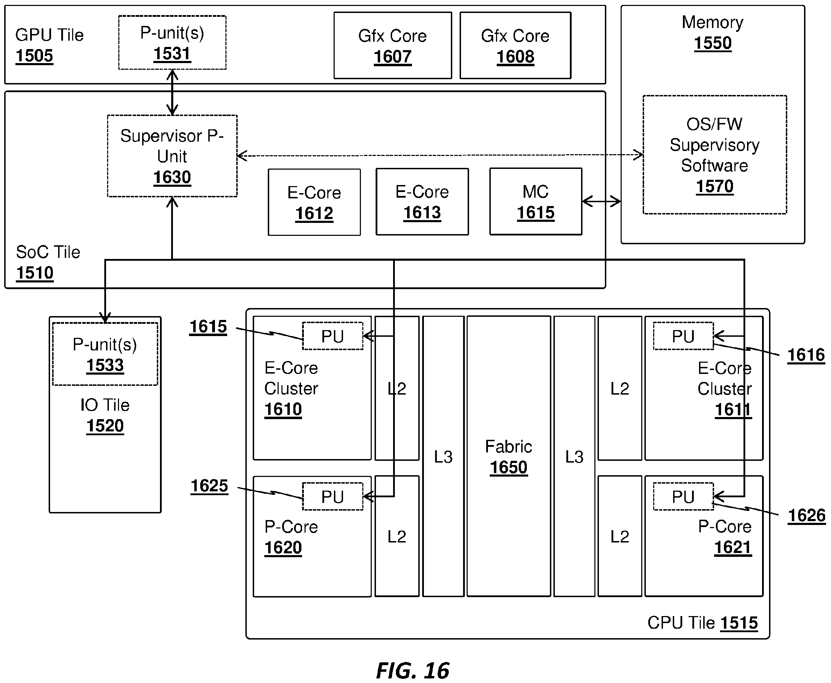

**Figure 16** illustrates additional details of one embodiment of a CPU tile 1515, which includes a heterogeneous set of cores including efficiency cores (E-cores) arranged into two E-core clusters 1610-1611 and a plurality of performance cores (P-cores) 1620-1621. Some embodiments of the SoC tile 1510 include a set of E-cores 1612-1613 and a memory controller 1615 to couple the processor to system memory 1550 (e.g., DDR DRAM memory, HBM memory, etc). Similarly, the GPU tile 1505 includes a plurality of graphics cores 1607-1608 which may be managed in the same manner as the P-cores and E-cores as described herein.

The E-cores in the E-core clusters 1610-1611 and the SoC tile 1510 are physically smaller (with multiple E-cores fitting into the physical die space of a P-core), are designed to maximize CPU efficiency, measured as performance-per-watt, and are typically used for scalable, multi-threaded performance. The E-cores work in concert with P-cores 1620-1621 to accelerate tasks which tend to consume a large number of cores. The E-cores are optimized to run background tasks efficiently and, as such, smaller tasks are typically offloaded to E-cores (e.g., handling Discord or antivirus software) - leaving the P-cores 1620-1621 free to drive high performance tasks such as gaming or 3D rendering.

The P-cores 1620-1621 are physically larger, high-performance cores which are tuned for high turbo frequencies and high IPC (instructions per cycle) and are particularly suited to processing heavy single-threaded work. In some embodiments, the P-cores are also capable of hyper-threading (i.e., concurrently running multiple software threads).

In the illustrated embodiment, separate P-units 1615-1616 are associated with each E-core cluster 1610-1611, respectively, to manage power consumption within each respective E-core cluster in response to messages from the supervisor P-unit 1630 and to communicate power usage metrics to the supervisor P-unit 1630. Similarly, separate P-units 1625-1626 are associated with each P-core 1620-1621, respectively, to manage power/performance of the respective P-core in response to the supervisor P-unit 1630 and to collect and communicate power usage metrics to the supervisor P-unit 1630.

In one embodiment, the local P-units 1615-1616, 1625-1626 manage power locally by independently adjusting frequency/voltage levels to each E-core cluster 1610-1611 and P-core 1620-1621, respectively. For example, P-units 1615-1616 control digital linear voltage regulators (DLVRs) and/or fully integrated voltage regulators (FIVRs) to independently manage the frequency/voltage applied to each E-core within the E-core clusters 1610-1611. Similarly, P-units 1625-1626 control another set of DLVRs and/or FIVRs to independently manage the frequency/voltage applied to each P-core 1620-1621. The graphics cores 1607-1608 and/or E-cores 1612-1613 may be similarly controlled via DLVRs/FIVRs. In these implementations, the frequency/voltage associated with a first core may be dynamically adjusted independently - i.e., without affecting the frequencies/ voltages of one or more other cores. The dynamic and independent control of individual E-cores/P-cores provides for processor-wide Dynamic Voltage and Frequency Scaling (DVFS) controlled by the supervisor P-unit 1630.

## APPARATUS AND METHOD FOR SYSTEM POWER

## OPTIMIZATIONS FOR USB IMAGING APPLICATIONS

USB cameras are widely used on client platforms due to cost and ease of platform engineering. Client platforms have so far not attempted to optimize system platform power consumption with USB camera. USB camera devices are generally implemented as isochronous devices that require the USB host controller on the SoC to read data from the camera periodically, typically every 125us. The data read from the camera is written by the host controller into system memory.

However, the continuous writing of data to memory results in heightened power consumption due to the processor package remaining in the C2 state. Additionally, in a multi-die processor package, increased power consumption is required in the die-to-die links connecting the IO die (that implements the USB controller) and the die that implements the memory controller (e.g., a compute die or a memory hub die). This results in additional power consumption of roughly 540mW.

Embodiments of the invention implement techniques to reduce the frequency of memory accesses when capturing data from a USB imaging device, such as a camera, and thereby minimize power consumption. In particular, these embodiments include mechanisms to prefetch USB DMA descriptors, a write buffer to store and aggregate data from the camera, and a control flow to flush the buffer at the appropriate time to reduce the frequency of memory accesses, while at the same time minimizing the additional system latencies due to the buffer. The prefetch operations and buffer size are configured to dramatically reduce memory access frequency. As one example, memory access frequency may be reduced to once in 10ms, compared to a memory access every 125us in existing implementations.

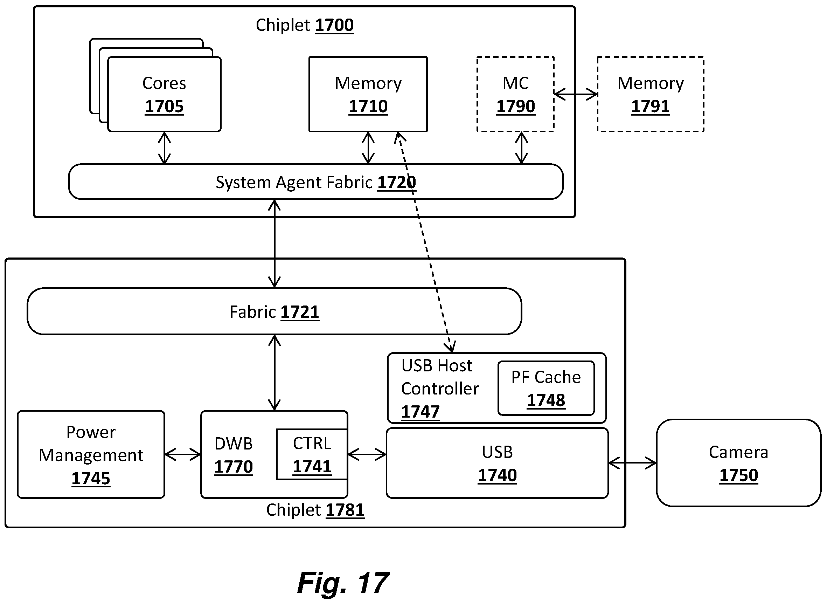

**Figure 17** illustrates an example implementation of a processor comprising a first chiplet 1700 with a plurality of processor cores 1705 and a memory 1710 coupled via a system agent fabric 1720. Alternatively, or additionally, a memory controller 1790 may couple the various processor components to an external memory device 1791 (e.g., a DRAM) via the system agent fabric 1720. In these embodiments, the memory 1710 may be a cache (e.g., an LLC shared by the cores 1705) or other shared local memory which stores the captured data prior to, during, and/or following storage in the external memory 1791.

A second chiplet includes an interconnect fabric 1721 coupled to the system agent fabric 1720. At least one embodiment includes a deferred write buffer (DWB) 1770 that stores incoming data from a camera 1750 or other image capture device coupled via a USB interface 1740. A power management controller 1745 (e.g., the PCU 1338 and P-unit(s) 1630, 1533, etc, as previously described), performs power management operations as described herein and may be coupled to the fabric 1721 via the DWB 1770 or may be coupled directly to the fabric 1721.

Thus, in this embodiment, the USB interface 1740 to which the camera 1750 connects is on a different chiplet 1781 than the chiplet 1700 including the memory 1710 and/or coupled to the external memory 1791. As described herein, the deferred write buffer 1770 may be sized based on the resolution of the imaging device 1750 and/or the desired idleness period.

Embodiments may also include control circuitry and/or logic 1741 to manage the filling and flushing of the buffer 1770 to ensure that the buffer 1770 stores incoming data without initially allowing it to flow through to memory 1710, and then flushes the data to memory 1710 at the point in time when software expects it to be in memory 1710. This reduces the traffic to memory and also minimizes additional latency for camera traffic, thus preserving the quality of service (QoS).

Embodiments of the invention may also include a USB host controller 1747 to prefetch direct memory access (DMA) descriptors sufficiently far in advance to allow for up to a defined idleness period (e.g., 10ms) of USB transactions with the camera 1750 without returning to memory 1741 and/or external memory 1791 to fetch additional descriptors. In these embodiments, each DMA descriptor specifies a portion of the data to be retrieved from the USB camera 1750 and written to memory (e.g., via source address information and destination address information, respectively).

## Write Buffer Sizing

The size of the deferred write buffer 1770 may be selected based on the anticipated resolution and frame rate of the camera 1750 and the desired idleness time. In particular, the amount of camera data to be stored in the deferred write buffer 1770 depends, at least in part, on the resolution of the camera 1750 and the frame rate, determined by (Resolution * Frame rate). By way of example, and not limitation, USB2 cameras are typically 720p (uncompressed) running at 30FPS. For this type of camera, a DWB buffer size of, for example, between 128KB and 384KB may be used, depending upon the desired idleness time (e.g., with larger DWB buffer sizes providing relatively longer idleness times).

**Camera Data Flow and relation to Buffer operation**

A typical USB Video Class (UVC) driver issues a USB Request Block (URB) every 16ms. This URB is mapped into a series of USB transactions which receive data from the camera 1750 and DMA transactions that move that data into the memory 1710 and/or external memory 1791. The DMA transaction is configured such that once all the data associated with the URB has been moved into memory 1710, the host controller 1747 issues an interrupt back to software (e.g., a Message Signaled Interrupt (MSI)).

Thus the data that is written back by the host controller 1747 to memory 1710/1791 is not read by software until all the data for the URB has been written into memory, and an interrupt issued. The implication of this is that the data that is written back by the host controller 1747 can be buffered within the SoC (e.g., within chiplet 1781) until the interrupt is issued by the host controller.

In some embodiments, the deferred write buffer 1770 is not just a standard watermark-based buffer. Rather, in some embodiments, the write buffer control circuitry/logic 1741 tracks the camera data flow and buffers the data until it is ready to be consumed by software.

**Buffer Control**

As mentioned, different buffer sizes may be used based on the desired CPU idle duration. This allows the processor cores 1705 to remain in package C8 or deeper power states for a longer period of time. The control circuitry/logic 1741 of the deferred write buffer 1740 tracks the stored USB camera data; when the data stored in the deferred write buffer 1770 reaches a pre-determined threshold for desired idleness time or an interrupt is received from the host controller 1747, the buffer control circuitry/logic 1741 may trigger a breakevent indication to the power management controller 1745 and the USB camera data is written from the deferred write buffer 1770 to memory 1710.

**TABLE C**

| DWB FSM States | Value | Descriptions |
|---|---|---|
| DWB_DISABLED | 00 | Bypass buffers; and always stream to memory when data is available |
| DWB_FILL | 01 | Keep storing data until the desired idleness threshold is reached. |
| DWB FLUSH | 11 | When Idleness time meet or Interrupt from Host controller (MSI), deferred write buffer will stream data to memory. |

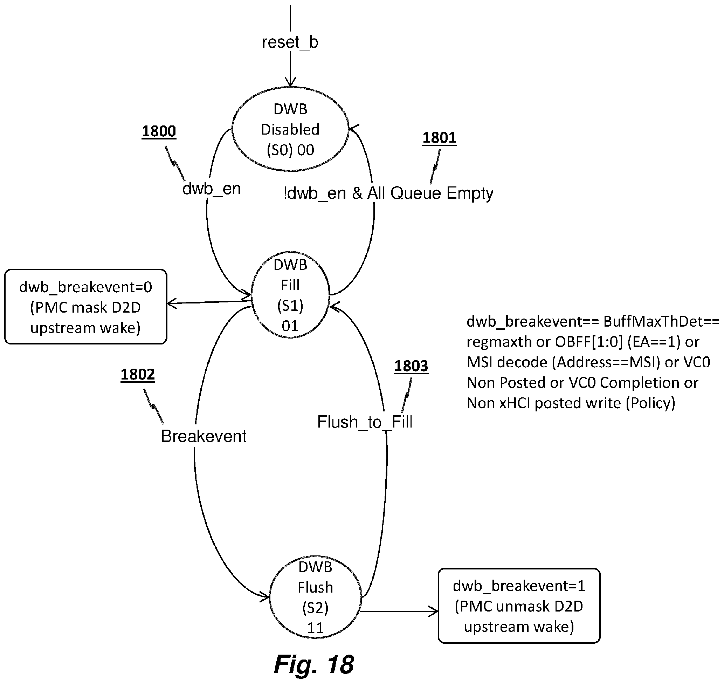

One embodiment of the buffer control circuitry/logic 1741 is implemented in a finite state machine, an example of which is shown in **Figure 18,** with the states described in Table C above: DWB_DISABLED (state value 00), DWB_Fill (state value 01), and DWB_FLUSH (state value 11). If the deferred write buffer 1770 is disabled (indicated by state value 00), then camera data is streamed directly to memory 1710/1791, bypassing the DWB 1770.

When the DWB is enabled, the buffer control circuitry/logic 1741 transitions at 1800 to the DWB fill mode (indicated by state value 01). When in DWB fill mode, the camera data is stored in the deferred write buffer 1770 until the desired idleness threshold is reached or one or more other specified events is detected (e.g., such as an interrupt which requires the core chiplet 1700 and/or the die-to-die interface to become powered). The desired idleness state may be specified in a variety of ways in accordance with embodiments of the invention. For example, a value may be set in one or more registers to indicate the idleness threshold. In one embodiment, for example, a counter register may be programmed with a value associated with the idleness threshold and may be decremented periodically (e.g., on each processor cycle) until it reaches a value of 0 which generates a breakevent 1802. Alternatively, or additionally, the DWB control circuitry/logic 1741 may monitor the amount of data stored in the DWB 1770 until a programmed threshold is reached, at which point it triggers the breakevent 1801. Alternatively, or in addition, the processor may include timer circuitry is set with the desired idleness time threshold and which will generate the breakevent 1802 at the end of the specified idleness time period.

The state transitions to the deferred write buffer flush state (indicated by state value 11) when the idleness time is reached or an interrupt is received from the host controller 1747 (e.g., an MSI), resulting in a breakevent 1802. When in the DWB flush state, the data is read from the DWB and written to the memory, after which the buffer control circuitry/logic 1741 transitions back to the DWB fill state (01) at 1803. When the DWB is disabled and all corresponding queues are empty, the buffer control circuitry/logic 1741 transitions back to the DWB disabled state (00) at 1801.

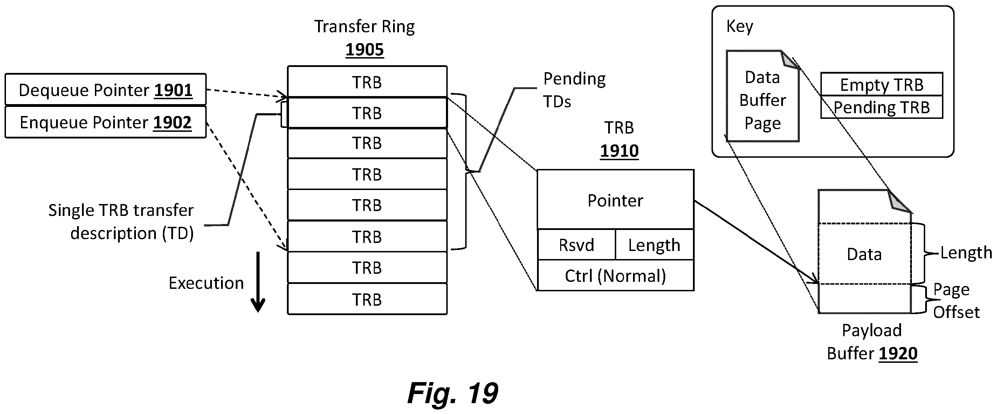

As shown in **Figure 19,** in some embodiments, DMA operation of the USB host controller 1747 is based on the XHCI specification which defines a DMA structure with Transfer Request Blocks (TRBs) 1910 placed in a circular queue called a TRB Ring 1905. An enqueue pointer 1902 points to the location in the transfer ring 1905 where the next TRB is to be stored and a dequeue pointer 1901 indicates the next TRB to be read from the transfer ring 1905 and processed. The pointers 1901-1902 may be stored in a control register or memory location.

Each TRB 1910 contains a pointer to a location in a payload buffer 1920 and a length of the data to be transferred. In one embodiment, the maximum size of the payload buffer is 64KB. With Isochronous USB transfers, a Transfer Descriptor (TD) comprises the group of chained TRBs associated with the data transferred in one service interval of the camera device. The service interval of a typical USB camera is 125uS.

Thus, before the host controller 1747 can write the data from the camera 1750 to memory 1710, it fetches at least one TRB from memory 1710. Since the objective is to keep the host controller 1747 from accessing memory 1710 for extended periods of time, the host controller 1747 fetches a number of TRBs in advance. At least one embodiment of the host controller 1747 implements a prefetch cache 1748 into which some number of TRBs are prefetched ahead of the current execution point. The number of TRBs prefetched may be based on the desired idleness period and/or the size of the DWB 1770.

### Size of the TRB Prefetch Cache

The USB Video Class driver typically issues USB Request Blocks (URBs), which are sized to a maximum of 128 TDs (or 128 service intervals worth of traffic). A URB represents one data transfer request from the class driver to the host controller driver. With a service interval of 125uS, 128 TDs represent 16ms.

With common driver implementations, each TD typically consists of 2 TRBs. Thus, for each supported Endpoint, 256 TRBs of storage will typically guarantee 16ms of transfers.

### Identifying Supported Endpoints

In some embodiments, the host controller 1747 identifies which endpoint is associated with the camera 1750 so that it can cache only TRBs associated with the camera. In different embodiments, various techniques may be used to inform the host controller 1747 about the endpoint associated with the camera 1750. For example, since the camera 1750 is integrated into the platform, the port number that the camera is connected to, as well as the endpoint number of the streaming endpoint within the camera 1750 could be programmed into the USB host controller 1747 by platform firmware such as BIOS firmware. In addition, the host controller 1747 can snoop bus enumeration traffic and detect the streaming endpoint associated with the camera 1750.

Alternatively, or additionally, the host controller 1747 can choose to cache TRBs in its prefetch cache 1748 for some number of endpoints, with this number being selected based on the typical number of active devices the average user is likely to have. This technique is simpler, since the host controller 1747 does not need to track which endpoint is associated with the camera. This allows the details described herein to work with discrete cameras connected to external ports as well. This implementation also allows the embodiments described herein to be extended to other connected devices.

### Prefetch Cache Operation

To maximize idleness of the cores 1705 and other devices on chiplet 1700, the prefetch logic of the USB host controller 1747 attempts to fill the cache 1748 at the beginning of camera transactions, with at least one full URBs worth of TRBs. Once the TRBs have been consumed and the URB has been transferred, the path to memory 1710 is opened and the received data is moved from the deferred write buffer 1770 to memory 1710. The prefetch control logic takes the opportunity to refill the TRB cache 1748 when the path to memory is already open, thus consolidating memory accesses. In addition, the prefetch logic of the USB host controller 1747 can opportunistically fetch new TRBs if the path to memory is open for any other reason.

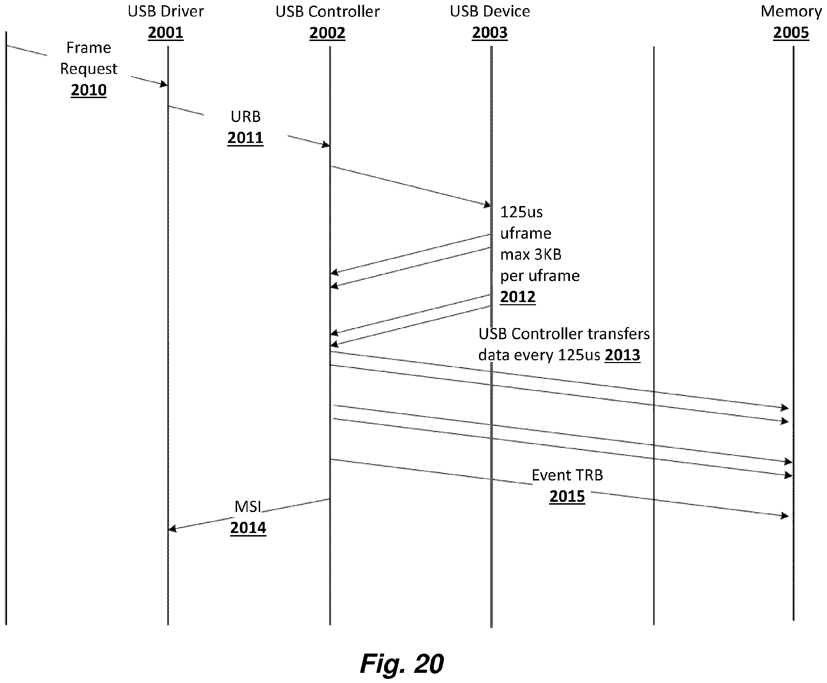

**Figure 20** illustrates a transaction diagram showing interactions between a USB driver 2001, USB controller 2002, USB device 2003, and memory 2005 in a current operational mode in which the USB controller transfers data from a USB device 2003 to the memory 2005 every 125us. In response to a frame request 2010 (e.g., from executing software), the USB driver 2001 generates a message indicating a URBs 2011 to the USB controller 202, which requests corresponding data from the USB device 2003. At 2012, the USB device transfers 125us portions of the requested frame (uframe) to the USB controller 2002 at a maximum of 3KB per uframe. At 2013, the USB controller transfers the data to memory 2005 every 125us. When the transfer is complete, the USB device transmits a TRB event message to memory 2005 at 2015 and generates an MSI to the USB driver 2001 at 2014.

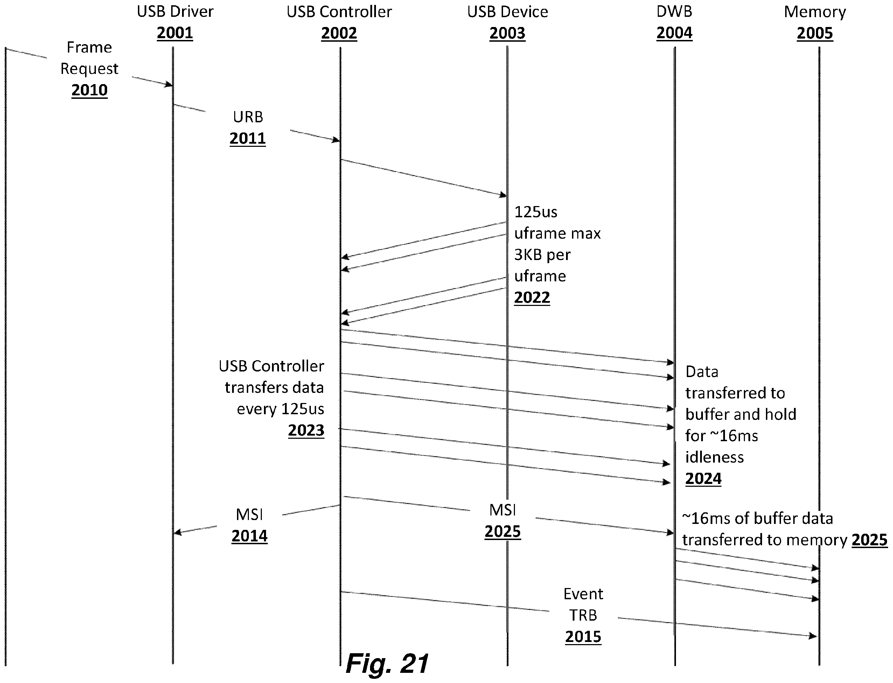

**Figure 21** illustrates operation in accordance with embodiments of the invention in which data is transferred from the USB controller 2002 to the deferred write buffer (DWB) 1004 rather than directly to memory 2005. As in **Figure 20,** at 2022, the USB device 2003 transfers 125us portions of the requested frame (uframe) to the USB controller 2002 at a maximum of 3KB per uframe. At 2023, the USB controller 2002 transfers the data to the DWB 2004 every 125us which holds the data for approximately 16ms idleness period at 2024. When a sufficient amount of time has passed (e.g., ~16ms) or a sufficient amount of data has been buffered in the DWB 2004, at 2025, the USB controller 2002 generates an interrupt (e.g., an MSI) to the DWB 2004 (e.g., to the control circuitry/logic 1741 of the DWB), causing the DWB to transfer the ~16ms of data to memory at 2025.

Embodiments of the invention enable longer idleness times on the path to memory and the memory subsystem, which results in saving ~540mW system power. The techniques described herein may be extended to other applications including, but not limited to, WiFi and Bluetooth interfaces; where frame rates are much lower and access memory.

EXAMPLES

The following are example implementations of different embodiments of the invention.

Example 1. A processor comprising: a first chiplet comprising a plurality of cores and a memory and/or an interface to an external memory; a second chiplet coupled to the first chiplet over an interconnect, the second chiplet comprising: a serial interface to couple an imaging device to the second chiplet, the imaging device to provide data over the serial interface; a deferred write buffer (DWB) coupled to the serial interface to temporarily store the data; and power control circuitry to cause the first chiplet enter a low power state in which the first chiplet is inaccessible to the second chiplet via the interconnect; control circuitry to defer direct memory access (DMA) operations transferring the data from the DWB to the memory and/or external memory while the first chiplet is in the low power state, the DMA operations to be deferred until a desired idleness time period associated with the first chiplet has been reached or until a specified amount of the data has been stored in the DWB corresponding to the desired idleness time period; the first chiplet to be triggered to exit from the low power state when the idleness time period has been reached or when the specified amount of data has been stored in the DWB, the data stored in the DWB to then be transferred to the memory and/or the external memory.

Example 2. The processor of example 1, wherein the control circuitry further comprises: a serial interface controller to prefetch a number of data transfer descriptors from the memory and/or external memory when the first chiplet is not in the low power state, the number of data transfer descriptors sufficient to allow the data to be continuously stored in the DWB during the idleness time period.

Example 3. The processor of example 1 or 2, wherein the serial interface controller comprises or is coupled to a cache to store the number of data transfer descriptors.

Example 4. The processor of any of examples 1-3, wherein the serial interface comprises a universal serial bus (USB) interface and the serial interface controller comprises a USB host controller, and wherein the data transfer descriptors comprise one or more Transfer Request Blocks (TRBs) stored in a TRB ring structure.

Example 5. The processor of any of examples 1-4, wherein the imaging device comprises a video camera and the data comprises video data captured from the video camera and transmitted over the serial interface.

Example 6. The processor of any of examples 1-5, wherein the control circuitry is to generate an interrupt to trigger the first chiplet to exit from the low power state.

Example 7. The processor of any of examples 1-6, wherein the control circuitry further comprises a DWB controller to write the data transferred over the serial interface to the DWB and to subsequently read the data from the DWB when the data is transferred to the memory and/or the external memory.

Example 8. A method, comprising: executing instructions by one or more cores of a plurality of cores of a first chiplet comprising a memory and/or an interface to an external memory; temporarily storing data received from an imaging device over a serial interface in a deferred write buffer (DWB) coupled to the serial interface, the DWB and serial interface on a second chiplet coupled to the first chiplet over an interconnect; causing the first chiplet enter a low power state in which the first chiplet is inaccessible to the second chiplet via the interconnect; deferring direct memory access (DMA) operations transferring the data from the DWB to the memory and/or external memory while the first chiplet is in the low power state, the DMA operations to be deferred until a desired idleness time period associated with the first chiplet has been reached or until a specified amount of the data has been stored in the DWB corresponding to the desired idleness time period; triggering the first chiplet to exit from the low power state when the idleness time period has been reached or when the specified amount of data has been stored in the DWB, the data stored in the DWB to then be transferred to the memory and/or the external memory.

Example 9. The method of example 8, further comprising: prefetching a number of data transfer descriptors from the memory and/or external memory when the first chiplet is not in the low power state, the number of data transfer descriptors sufficient to allow the data to be continuously stored in the DWB during the idleness time period.

Example 10. The method of examples 8 or 9, further comprising: storing the number of data transfer descriptors in a cache accessible when the first chiplet is in the low power state.

Example 11. The method of any of examples 8-10, wherein the serial interface comprises a universal serial bus (USB) interface and the serial interface controller comprises a USB host controller, and wherein the data transfer descriptors comprise one or more Transfer Request Blocks (TRBs) stored in a TRB ring structure.

Example 12. The method of any of examples 8-11, wherein the imaging device comprises a video camera and the data comprises video data captured from the video camera and provided over the serial interface.

Example 13. The method of any of examples 8-12, further comprising: generating an interrupt to trigger the first chiplet to exit from the low power state.

Example 14. The method of any of examples 8-13, wherein a DWB controller is to write the data transferred over the serial interface to the DWB and to subsequently read the data from the DWB when the data is transferred to the memory and/or the external memory.

Example 15. A machine-readable medium having program code stored thereon which, when executed by a machine, causes the machine to perform operations, comprising: executing instructions by one or more cores of a plurality of cores of a first chiplet comprising a memory and/or an interface to an external memory; temporarily storing data received from an imaging device over a serial interface in a deferred write buffer (DWB) coupled to the serial interface, the DWB and serial interface on a second chiplet coupled to the first chiplet over an interconnect; causing the first chiplet enter a low power state in which the first chiplet is inaccessible to the second chiplet via the interconnect; deferring direct memory access (DMA) operations transferring the data from the DWB to the memory and/or external memory while the first chiplet is in the low power state, the DMA operations to be deferred until a desired idleness time period associated with the first chiplet has been reached or until a specified amount of the data has been stored in the DWB corresponding to the desired idleness time period; triggering the first chiplet to exit from the low power state when the idleness time period has been reached or when the specified amount of data has been stored in the DWB, the data stored in the DWB to then be transferred to the memory and/or the external memory.

Example 16. The machine-readable medium of example 15, further comprising: prefetching a number of data transfer descriptors from the memory and/or external memory when the first chiplet is not in the low power state, the number of data transfer descriptors sufficient to allow the data to be continuously stored in the DWB during the idleness time period.

Example 17. The machine-readable medium of examples 15 or 16, further comprising program code to cause the machine to perform the operations of: storing the number of data transfer descriptors in a cache accessible when the first chiplet is in the low power state.

Example 18. The machine-readable medium of any of examples 15-17, wherein the serial interface comprises a universal serial bus (USB) interface and the serial interface controller comprises a USB host controller, and wherein the data transfer descriptors comprise one or more Transfer Request Blocks (TRBs) stored in a TRB ring structure.

Example 19. The machine-readable medium of any of examples 15-18, wherein the imaging device comprises a video camera and the data comprises video data captured from the video camera and provided over the serial interface.

Example 20. The machine-readable medium of any of examples 15-19, further comprising program code to cause the machine to perform the operations of: generating an interrupt to trigger the first chiplet to exit from the low power state.

Embodiments of the invention may include various steps, which have been described above. The steps may be embodied in machine-executable instructions which may be used to cause a general-purpose or special-purpose processor to perform the steps. Alternatively, these steps may be performed by specific hardware components that contain hardwired logic for performing the steps, or by any combination of programmed computer components and custom hardware components.

As described herein, instructions may refer to specific configurations of hardware such as application specific integrated circuits (ASICs) configured to perform certain operations or having a predetermined functionality or software instructions stored in memory embodied in a non-transitory computer readable medium. Thus, the techniques shown in the Figures can be implemented using code and data stored and executed on one or more electronic devices (e.g., an end station, a network element, etc.). Such electronic devices store and communicate (internally and/or with other electronic devices over a network) code and data using computer machine-readable media, such as non-transitory computer machine-readable storage media (e.g., magnetic disks; optical disks; random access memory; read only memory; flash memory devices; phase-change memory) and transitory computer machine-readable communication media (e.g., electrical, optical, acoustical or other form of propagated signals - such as carrier waves, infrared signals, digital signals, etc.). In addition, such electronic devices typically include a set of one or more processors coupled to one or more other components, such as one or more storage devices (non-transitory machine-readable storage media), user input/output devices (e.g., a keyboard, a touchscreen, and/or a display), and network connections. The coupling of the set of processors and other components is typically through one or more busses and bridges (also termed as bus controllers). The storage device and signals carrying the network traffic respectively represent one or more machine-readable storage media and machine-readable communication media. Thus, the storage device of a given electronic device typically stores code and/or data for execution on the set of one or more processors of that electronic device. Of course, one or more parts of an embodiment of the invention may be implemented using different combinations of software, firmware, and/or hardware. Throughout this detailed description, for the purposes of explanation, numerous specific details were set forth in order to provide a thorough understanding of the present invention. It will be apparent, however, to one skilled in the art that the invention may be practiced without some of these specific details. In certain instances, well known structures and functions were not described in elaborate detail in order to avoid obscuring the subject matter of the present invention.

Accordingly, the scope and spirit of the invention should be judged in terms of the claims which follow.

**Claims**

1. A processor comprising:

   a first chiplet comprising a plurality of cores and a memory and/or an interface to an external memory;
   a second chiplet coupled to the first chiplet over an interconnect, the second chiplet comprising:

   a serial interface to couple an imaging device to the second chiplet, the imaging device to provide data over the serial interface;
   a deferred write buffer (DWB) coupled to the serial interface to temporarily store the data; and
   power control circuitry to cause the first chiplet enter a low power state in which the first chiplet is inaccessible to the second chiplet via the interconnect;
   control circuitry to defer direct memory access (DMA) operations transferring the data from the DWB to the memory and/or external memory while the first chiplet is in the low power state, the DMA operations to be deferred until a desired threshold associated with the first chiplet has been reached;
   the first chiplet to be triggered to exit from the low power state when the desired threshold has been reached, the data stored in the DWB to then be transferred to the memory and/or the external memory.

2. The processor of claim 1, wherein the control circuitry further comprises:
   a serial interface controller to prefetch a plurality of data transfer descriptors from the memory and/or external memory when the first chiplet is not in the low power state, the plurality of data transfer descriptors sufficient to allow the data to be stored in the DWB during the idleness time period.

3. The processor of claim 2, wherein the serial interface controller comprises or is coupled to a cache to store the plurality of data transfer descriptors.

4. The processor of claim 3, wherein the serial interface comprises a universal serial bus (USB) interface and the serial interface controller comprises a USB host controller, and wherein the data transfer descriptors comprise one or more Transfer Request Blocks (TRBs) stored in a TRB ring structure.

5. The processor of any of claims 1 to 4, wherein the imaging device comprises a video camera and the data comprises video data captured from the video camera and transmitted over the serial interface.

6. The processor of any of claims 1 to 5, wherein the control circuitry is to generate an interrupt to trigger the first chiplet to exit from the low power state.

7. The processor of any of claims 2 to 6, wherein the control circuitry further comprises a DWB controller to write the data transferred over the serial interface to the DWB and to subsequently read the data from the DWB when the data is transferred to the memory and/or the external memory.

8. The processor of any of claims 1 to 7 wherein the desired threshold comprises a desired time period or a desired amount of the data stored in the DWB.

9. A method, comprising:

   executing instructions by one or more cores of a plurality of cores of a first chiplet comprising a memory and/or an interface to an external memory;
   temporarily storing data received from an imaging device over a serial interface in a deferred write buffer (DWB) coupled to the serial interface, the DWB and serial interface on a second chiplet coupled to the first chiplet over an interconnect;
   causing the first chiplet enter a low power state in which the first chiplet is inaccessible to the second chiplet via the interconnect;
   deferring direct memory access (DMA) operations transferring the data from the DWB to the memory and/or external memory while the first chiplet is in the low power state, the DMA operations to be deferred until a desired threshold associated with the first chiplet has been reached;

triggering the first chiplet to exit from the low power state when the desired threshold has been reached, the data stored in the DWB to then be transferred to the memory and/or the external memory.

10. The method of claim 9 further comprising:
prefetching a number of data transfer descriptors from the memory and/or external memory when the first chiplet is not in the low power state, the plurality of data transfer descriptors sufficient to allow the data to be stored in the DWB during the idleness time period.

11. The method of claim 10, further comprising:
storing the plurality of data transfer descriptors in a cache accessible when the first chiplet is in the low power state.

12. The method of claim 11, wherein the serial interface comprises a universal serial bus (USB) interface and the serial interface controller comprises a USB host controller, and wherein the data transfer descriptors comprise one or more Transfer Request Blocks (TRBs) stored in a TRB ring structure.

13. The method of any of claims 9 to 12, wherein the imaging device comprises a video camera and the data comprises video data captured from the video camera and provided over the serial interface.

14. The method of any of claims 9 to 13, further comprising: generating an interrupt to trigger the first chiplet to exit from the low power state.

15. The method of any of claims 9 to 14, wherein a DWB controller is to write the data transferred over the serial interface to the DWB and to subsequently read the data from the DWB when the data is transferred to the memory and/or the external memory.

**FIG. 1**

EP 4 625 113 A1

PROCESSOR 200

| SPECIAL PURPOSE LOGIC 208 | CORE 202A CACHE UNIT(S) 204A | CORE 202N CACHE UNIT(S) 204N | SYSTEM AGENT UNIT 210 INTEGRATED MEMORY CONTROLLER UNIT(S) 214 | INTERCONNECT CONTROLLER UNIT(S) 216 |

SHARED CACHE UNIT(S) 206

INTERCONNECT NETWORK 212

**FIG. 2**

PIPELINE 300

| FETCH 302 | LENGTH DECODING 304 | DECODE 306 | ALLOC. 308 | RENAMING 310 | SCHEDULE 312 | REGISTER READ/ MEMORY READ 314 | EXECUTE STAGE 316 | WRITE BACK/ MEMORY WRITE 318 | EXCEPTION HANDLING 322 | COMMIT 324 |

**FIG. 3(A)**

EP 4 625 113 A1

FIG. 3(B)

EP 4 625 113 A1

EP 4 625 113 A1

EXECUTION UNIT(S) CIRCUITRY
`BPC62

ALU 401

VECTOR/SIMD 403

LOAD/STORE 405

BRANCH/JUMP 407

FPU 409

**FIG. 4**

REGISTER ARCHITECTURE
500

SEGMENT REGISTERS 520

MACHINE SPECIFIC REGISTERS 535

WRITEMASK/PREDICATE REGISTERS 515

INSTRUCTION POINTER REGISTER(S) 530

SCALAR FP REGISTER FILE 545

CONTROL REGISTER(S) 555

VECTOR/SIMD REGISTERS 510

DEBUG REGISTERS 550

GENERAL PURPOSE REGISTERS 525

MEM. MANAGEMENT REGISTERS 565

FLAG REGISTER(S) 540

MACHINE CHECK REGISTERS 560

FIG. 5

FIG. 6

PREFIX(ES) 601 | OPCODE 603 | ADDRESSING 605 | DISPLACEMENT 607 | IMMEDIATE 609

ADDRESSING
605

MOD R/M BYTE 702

| 7 | 6 5 | 3 2 | 0 |
|---|---|---|---|
| MOD 742 | REG 744 | R/M 746 | |

SIB BYTE 704

| 7 | 6 5 | 3 2 | 0 |
|---|---|---|---|
| SCALE ss 752 | INDEX xxx 754 | BASE bbb 756 | |

MOD R/M    SIB

FIG. 7

EP 4 625 113 A1

36

## FIG. 8

PREFIX 601(A)

| 7 | 6 | 5 | 4 | 3 | 2 | 1 | 0 |
|---|---|---|---|---|---|---|---|
| 0 | 1 | 0 | 0 | W | R | X | B |

**FIG. 8**

---

PREFIX 601(A)   OPCODE 603

MOD R/M 702

| MOD 742 | REG 744 | R/M 746 |
|---------|---------|---------|
| !=11 | rrr | bbb |

Rrrr   Bbbb

**FIG. 9(A)**

---

PREFIX 601(A)   OPCODE 603

MOD R/M 702

| MOD 742 | REG 744 | R/M 746 |
|---------|---------|---------|
| 11 | rrr | bbb |

Rrrr   Bbbb

**FIG. 9(B)**

---

PREFIX 601(A)   OPCODE 603

MOD R/M 702

| MOD 742 | REG 744 | R/M 746 |
|---------|---------|---------|
| !=11 | rrr | 100 |

SIB 704

| SCL 752 | INDEX 754 | BASE 756 |
|---------|-----------|----------|
|  | xxx | bbb |

Rrrr   Xxxx   Bbbb

**FIG. 9(C)**

---

PREFIX 601(A)   OPCODE 603

MOD R/M 702

| REG 744 |
|---------|
| bbb |

Bbbb

**FIG. 9(D)**

FIG. 10(A)

FIG. 10(B)

PREFIX 601(C)

| | 23 | 22 | 21 | 20 | 19 | 18 | 17 | 16 | 15 | 14 | 13 | 12 | 11 | 10 | 9 | 8 | 7 | 6 | 5 | 4 | 3 | 2 | 1 | 0 |
|---|---|---|---|---|---|---|---|---|---|---|---|---|---|---|---|---|---|---|---|---|---|---|---|---|
| FORMAT 1111 | z | L' | L | b | V' | a | a | a | W | v | v | v | v | 1 | p | p | R | X | B | R' | 0 | 0 | m | m |

PAYLOAD BYTE 2
1115

PAYLOAD BYTE 1
1117

PAYLOAD BYTE 0
1119

FIG. 11

FIG. 12

EP 4 625 113 A1

FIG. 13

Fig. 14

EP 4 625 113 A1

FIG. 15

*FIG. 16*

**Fig. 17**

EP 4 625 113 A1

reset_b

DWB
Disabled
(S0) 00

1800

dwb_en

1801

!dwb_en & All Queue Empty

dwb_breakevent=0
(PMC mask D2D
upstream wake)

DWB
Fill
(S1)
01

dwb_breakevent== BuffMaxThDet==
regmaxth or OBFF[1:0] (EA==1) or
MSI decode (Address==MSI) or VC0
Non Posted or VC0 Completion or
Non xHCI posted write (Policy)

1802

Breakevent

1803

Flush_to_Fill

DWB
Flush
(S2)
11

dwb_breakevent=1
(PMC unmask D2D
upstream wake)

**Fig. 18**

**Fig. 19**

*Transfer Ring* **1905**

Dequeue Pointer **1901**

Enqueue Pointer **1902**

Single TRB transfer description (TD)

Execution

TRB
TRB
TRB
TRB
TRB
TRB
TRB
TRB

Pending TDs

TRB **1910**

Pointer

| Rsvd | Length |
| Ctrl (Normal) | |

Key

Data Buffer Page

Empty TRB
Pending TRB

Payload Buffer **1920**

Data

Length
Page
Offset

EP 4 625 113 A1

USB Driver **2001**   USB Controller **2002**   USB Device **2003**   Memory **2005**

Frame
Request
**2010**

URB
**2011**

125us
uframe
max 3KB
per uframe
**2012**

USB Controller transfers
data every 125us **2013**

Event TRB
**2015**

MSI
**2014**

*Fig. 20*

*Fig. 21*

USB Driver **2001**    USB Controller **2002**    USB Device **2003**    DWB **2004**    Memory **2005**

Frame Request **2010**

URB **2011**

125us uframe max 3KB per uframe **2022**

USB Controller transfers data every 125us **2023**

Data transferred to buffer and hold for ~16ms idleness **2024**

MSI **2014**

MSI **2025**

~16ms of buffer data transferred to memory **2025**

Event TRB **2015**

Europäisches
Patentamt
European
Patent Office
Office européen
des brevets

# EUROPEAN SEARCH REPORT

**Application Number**

EP 25 15 8402

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/260320 A1 (LI YANRU [US] ET AL) 13 September 2018 (2018-09-13) * the whole document * | 1-15 | INV. G06F1/3234 G06F1/3225 G06F1/3228 G06F1/3287 G06F3/06 |
| X | US 2018/181186 A1 (DIEFENBAUGH PAUL S [US] ET AL) 28 June 2018 (2018-06-28) * abstract * * paragraph [0001] - paragraph [0006] * * paragraph [0014] - paragraph [0036]; figures 1, 2 * * paragraph [0043] - paragraph [0048]; figure 4 * | 1-15 | |
| A | US 2020/174953 A1 (SANGHI KARAN [US] ET AL) 4 June 2020 (2020-06-04) * abstract * * paragraph [0079] - paragraph [0097]; figures 3-6 * | 1-15 | |

**TECHNICAL FIELDS SEARCHED (IPC)**

G06F

The present search report has been drawn up for all claims

| Place of search | Date of completion of the search | Examiner |
|---|---|---|
| The Hague | 4 June 2025 | Ribeiro, Jorge |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 8402

This annex lists the patent family members relating to the patent documents cited in the above-mentioned European search report.
The members are as contained in the European Patent Office EDP file on
The European Patent Office is in no way liable for these particulars which are merely given for the purpose of information.

04-06-2025

| Patent document cited in search report | Publication date | Patent family member(s) | Publication date |
|---|---|---|---|
| US 2018260320 A1 | 13-09-2018 | TW 201843561 A<br>US 2018260320 A1<br>WO 2018169645 A1 | 16-12-2018<br>13-09-2018<br>20-09-2018 |
| US 2018181186 A1 | 28-06-2018 | NONE | |
| US 2020174953 A1 | 04-06-2020 | US 2016364350 A1<br>US 2019034368 A1<br>US 2020174953 A1 | 15-12-2016<br>31-01-2019<br>04-06-2020 |

EPO FORM P0459

For more details about this annex : see Official Journal of the European Patent Office, No. 12/82